# EUROPEAN PATENT APPLICATION

(11) **EP 4 844 553 A1**
(43) Date of publication of application: **25.11.2026**
(21) Application number: 26178493.8
(22) Date of filing: 13.05.2026
(51) Int. Cl.: G06F 3/0482, G06F 3/04842, G06F 3/04886

(54) **USER INTERFACES FOR PERFORMING A SUGGESTED ACTION**

(30) Priority: 19.05.2025 US 202563808540 P; 31.12.2025 US 202519438221
(71) Applicant: Apple Inc., Cupertino, CA 95014 (US)
(72) Inventor: BOWMAN, Bryn, Cupertino, 95014 (US); CHANG, Jae Woo, Cupertino, 95014 (US); CILI, Gencer, Cupertino, 95014 (US); REVO, Ashwin, Cupertino, 95014 (US); TIRTHAHALLI, Aditya P., Cupertino, 95014 (US)
(74) Representative: Zacco Denmark A/S

(57) **Abstract**

The present disclosure generally relates to user interfaces for performing suggested actions. In some embodiments, methods and user interfaces for performing suggested actions while displaying at least a portion of a respective user interface are described. In some embodiments, methods and user interfaces for performing suggested actions or modifying suggested actions that have been performed are described.

## Description

### FIELD

The present disclosure relates generally to computer user interfaces, and more specifically to techniques for performing suggested actions.

### BACKGROUND

Electronic devices include displays that can be used to display various types of content and to provide information to a user. Electronic devices, such as smartphones and smartwatches, can be used to perform actions associated with displayed information.

### BRIEF SUMMARY

Some techniques for performing suggested actions using electronic devices, however, are generally cumbersome and inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient methods and interfaces for performing suggested actions. Such methods and interfaces optionally complement or replace other methods for performing suggested actions. Such methods and interfaces reduce the cognitive burden on a user and produce a more efficient human-machine interface. For battery-operated computing devices, such methods and interfaces conserve power and increase the time between battery charges.

In accordance with some embodiments, a method is described. The method comprises: at a computer system that is in communication with one or more display generation components and one or more input devices: displaying, via the one or more display generation components, a first user interface, that includes: textual content; and an indication that one or more suggested actions related to the textual content have been identified; detecting, via the one or more input devices, a first set of one or more inputs corresponding to a request to initiate a suggested action of the one or more suggested actions; in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface; while concurrently displaying the second user interface and at least the portion of the first user interface, detecting, via the one or more input devices, a second set of one or more inputs corresponding to a request to perform the suggested action; and in response to detecting the second set of one or more inputs, performing the suggested action while continuing to display at least the portion of the first user interface.

In some embodiments, a non-transitory computer-readable storage medium is described. The non-transitory computer-readable storage medium stories one or more programs configured to be executed by one or more processors of a computer system that is in communication with one or more display generation components and one or more input devices, the one or more programs including instructions for: displaying, via the one or more display generation components, a first user interface, that includes: textual content; and an indication that one or more suggested actions related to the textual content have been identified; detecting, via the one or more input devices, a first set of one or more inputs corresponding to a request to initiate a suggested action of the one or more suggested actions; in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface; while concurrently displaying the second user interface and at least the portion of the first user interface, detecting, via the one or more input devices, a second set of one or more inputs corresponding to a request to perform the suggested action; and in response to detecting the second set of one or more inputs, performing the suggested action while continuing to display at least the portion of the first user interface.

In some embodiments, a transitory computer-readable storage medium is described. The transitory computer-readable storage medium stores one or more programs configured to be executed by one or more processors of a computer system that is in communication with one or more display generation components and one or more input devices, the one or more programs including instructions for: displaying, via the one or more display generation components, a first user interface, that includes: textual content; and an indication that one or more suggested actions related to the textual content have been identified; detecting, via the one or more input devices, a first set of one or more inputs corresponding to a request to initiate a suggested action of the one or more suggested actions; in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface; while concurrently displaying the second user interface and at least the portion of the first user interface, detecting, via the one or more input devices, a second set of one or more inputs corresponding to a request to perform the suggested action; and in response to detecting the second set of one or more inputs, performing the suggested action while continuing to display at least the portion of the first user interface.

In some embodiments, a computer system is described. The computer system is configured to communicate with one or more display generation components and one or more input devices, comprising: one or more processors; and memory storing one or more programs configured to be executed by the one or more processors, the one or more programs including instructions for: displaying, via the one or more display generation components, a first user interface, that includes: textual content; and an indication that one or more suggested actions related to the textual content have been identified; detecting, via the one or more input devices, a first set of one or more inputs corresponding to a request to initiate a suggested action of the one or more suggested actions; in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface; while concurrently displaying the second user interface and at least the portion of the first user interface, detecting, via the one or more input devices, a second set of one or more inputs corresponding to a request to perform the suggested action; and in response to detecting the second set of one or more inputs, performing the suggested action while continuing to display at least the portion of the first user interface.

In some embodiments, a computer system configured to communicate with one or more display generation components and one or more input devices is described. The computer system comprises: means for displaying, via the one or more display generation components, a first user interface, that includes: textual content; and an indication that one or more suggested actions related to the textual content have been identified; means for detecting, via the one or more input devices, a first set of one or more inputs corresponding to a request to initiate a suggested action of the one or more suggested actions; means for, in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface; means for, while concurrently displaying the second user interface and at least the portion of the first user interface, detecting, via the one or more input devices, a second set of one or more inputs corresponding to a request to perform the suggested action; and means for, in response to detecting the second set of one or more inputs, performing the suggested action while continuing to display at least the portion of the first user interface.

In some embodiments, a computer program product is described. The computer program product comprises one or more programs configured to be executed by one or more processors of a computer system that is in communication with one or more display generation components and one or more input devices, the one or more programs including instructions for: displaying, via the one or more display generation components, a first user interface, that includes: textual content; and an indication that one or more suggested actions related to the textual content have been identified; detecting, via the one or more input devices, a first set of one or more inputs corresponding to a request to initiate a suggested action of the one or more suggested actions; in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface; while concurrently displaying the second user interface and at least the portion of the first user interface, detecting, via the one or more input devices, a second set of one or more inputs corresponding to a request to perform the suggested action; and in response to detecting the second set of one or more inputs, performing the suggested action while continuing to display at least the portion of the first user interface.

In accordance with some embodiments, a method is described. The method comprises: at a computer system that is in communication with one or more display generation components and one or more input devices: displaying, via the one or more display generation components, a user interface, that includes: textual content; and an indication that one or more suggested actions related to the textual content have been identified; while displaying the user interface: in accordance with a determination that the one or more suggested actions have not been performed, displaying, via the one or more display generation components, a graphical user interface object corresponding to performing one or more of the one or more suggested actions; in accordance with a determination that a suggested action of the one or more suggested actions has been performed, displaying, via the one or more display generation components, a graphical user interface object corresponding to modifying the suggested action that has been performed; detecting, via the one or more input devices, selection of a respective graphical user interface object; in response to detecting selection of the respective graphical user interface object: in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and in accordance with a determination that the respective graphical user interface object is the graphical user interface object corresponding to modifying the suggested action that has been performed, displaying, via the one or more display generation components, a set of one or more options for modifying the suggested action that has been performed.

In some embodiments, a non-transitory computer-readable storage medium is described. The non-transitory computer-readable storage medium stores one or more programs configured to be executed by one or more processors of a computer system that is in communication with one or more display generation components and one or more input devices, the one or more programs including instructions for: displaying, via the one or more display generation components, a user interface, that includes: textual content; and an indication that one or more suggested actions related to the textual content have been identified; while displaying the user interface: in accordance with a determination that the one or more suggested actions have not been performed, displaying, via the one or more display generation components, a graphical user interface object corresponding to performing one or more of the one or more suggested actions; in accordance with a determination that a suggested action of the one or more suggested actions has been performed, displaying, via the one or more display generation components, a graphical user interface object corresponding to modifying the suggested action that has been performed; detecting, via the one or more input devices, selection of a respective graphical user interface object; in response to detecting selection of the respective graphical user interface object: in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and in accordance with a determination that the respective graphical user interface object is the graphical user interface object corresponding to modifying the suggested action that has been performed, displaying, via the one or more display generation components, a set of one or more options for modifying the suggested action that has been performed.

In some embodiments, a transitory computer-readable storage medium is described. The transitory computer-readable storage medium stores one or more programs configured to be executed by one or more processors of a computer system that is in communication with one or more display generation components and one or more input devices, the one or more programs including instructions for: displaying, via the one or more display generation components, a user interface, that includes: textual content; and an indication that one or more suggested actions related to the textual content have been identified; while displaying the user interface: in accordance with a determination that the one or more suggested actions have not been performed, displaying, via the one or more display generation components, a graphical user interface object corresponding to performing one or more of the one or more suggested actions; in accordance with a determination that a suggested action of the one or more suggested actions has been performed, displaying, via the one or more display generation components, a graphical user interface object corresponding to modifying the suggested action that has been performed; detecting, via the one or more input devices, selection of a respective graphical user interface object; in response to detecting selection of the respective graphical user interface object: in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and in accordance with a determination that the respective graphical user interface object is the graphical user interface object corresponding to modifying the suggested action that has been performed, displaying, via the one or more display generation components, a set of one or more options for modifying the suggested action that has been performed.

In some embodiments, a computer system is described. The computer system is configured to communicate with one or more display generation components and one or more input devices, comprising: one or more processors; and memory storing one or more programs configured to be executed by the one or more processors, the one or more programs including instructions for: displaying, via the one or more display generation components, a user interface, that includes: textual content; and an indication that one or more suggested actions related to the textual content have been identified; while displaying the user interface: in accordance with a determination that the one or more suggested actions have not been performed, displaying, via the one or more display generation components, a graphical user interface object corresponding to performing one or more of the one or more suggested actions; in accordance with a determination that a suggested action of the one or more suggested actions has been performed, displaying, via the one or more display generation components, a graphical user interface object corresponding to modifying the suggested action that has been performed; detecting, via the one or more input devices, selection of a respective graphical user interface object; in response to detecting selection of the respective graphical user interface object: in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and in accordance with a determination that the respective graphical user interface object is the graphical user interface object corresponding to modifying the suggested action that has been performed, displaying, via the one or more display generation components, a set of one or more options for modifying the suggested action that has been performed.

In some embodiments, a computer system is described. The computer system is configured to communicate with one or more display generation components and one or more input devices, comprising: means for displaying, via the one or more display generation components, a user interface, that includes: textual content; and an indication that one or more suggested actions related to the textual content have been identified; means for, while displaying the user interface: in accordance with a determination that the one or more suggested actions have not been performed, displaying, via the one or more display generation components, a graphical user interface object corresponding to performing one or more of the one or more suggested actions; in accordance with a determination that a suggested action of the one or more suggested actions has been performed, displaying, via the one or more display generation components, a graphical user interface object corresponding to modifying the suggested action that has been performed; means for detecting, via the one or more input devices, selection of a respective graphical user interface object; means for, in response to detecting selection of the respective graphical user interface object: in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and in accordance with a determination that the respective graphical user interface object is the graphical user interface object corresponding to modifying the suggested action that has been performed, displaying, via the one or more display generation components, a set of one or more options for modifying the suggested action that has been performed.

In some embodiments, a computer program product is described. The computer program product comprises one or more programs configured to be executed by one or more processors of a computer system that is in communication with one or more display generation components and one or more input devices, the one or more programs including instructions for: displaying, via the one or more display generation components, a user interface, that includes: textual content; and an indication that one or more suggested actions related to the textual content have been identified; while displaying the user interface: in accordance with a determination that the one or more suggested actions have not been performed, displaying, via the one or more display generation components, a graphical user interface object corresponding to performing one or more of the one or more suggested actions; in accordance with a determination that a suggested action of the one or more suggested actions has been performed, displaying, via the one or more display generation components, a graphical user interface object corresponding to modifying the suggested action that has been performed; detecting, via the one or more input devices, selection of a respective graphical user interface object; in response to detecting selection of the respective graphical user interface object: in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and in accordance with a determination that the respective graphical user interface object is the graphical user interface object corresponding to modifying the suggested action that has been performed, displaying, via the one or more display generation components, a set of one or more options for modifying the suggested action that has been performed.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for performing suggested actions, thereby increasing the effectiveness, efficiency, and user satisfaction with such devices. Such methods and interfaces may complement or replace other methods for performing suggested actions.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3A is a block diagram of an exemplary multifunction device with a display and a touch-sensitive surface in accordance with some embodiments.
FIGS. 3B-3G illustrate the use of Application Programming Interfaces (APIs) to perform operations.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIGS. 6A-6O illustrate exemplary user interfaces for performing suggested actions while displaying at least a portion of a respective user interface in accordance with some embodiments.
FIG. 7 is a flow diagram illustrating methods for displaying a user interface for performing suggested actions while displaying at least a portion of a respective user interface in accordance with some embodiments.
FIGS. 8A-8L illustrate exemplary user interfaces for performing suggested actions or modifying suggested actions that have been performed in accordance with some embodiments.
FIGS. 9A-9B are a flow diagram illustrating methods for displaying a user interface for performing a suggested action or modifying a suggested action that has been performed in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for identifying, displaying, and performing suggested actions associated with displayed information. Such techniques can reduce the cognitive burden on a user who perform actions associated with displayed information, thereby enhancing productivity. Further, such techniques can reduce processor and battery power otherwise wasted on redundant user inputs.

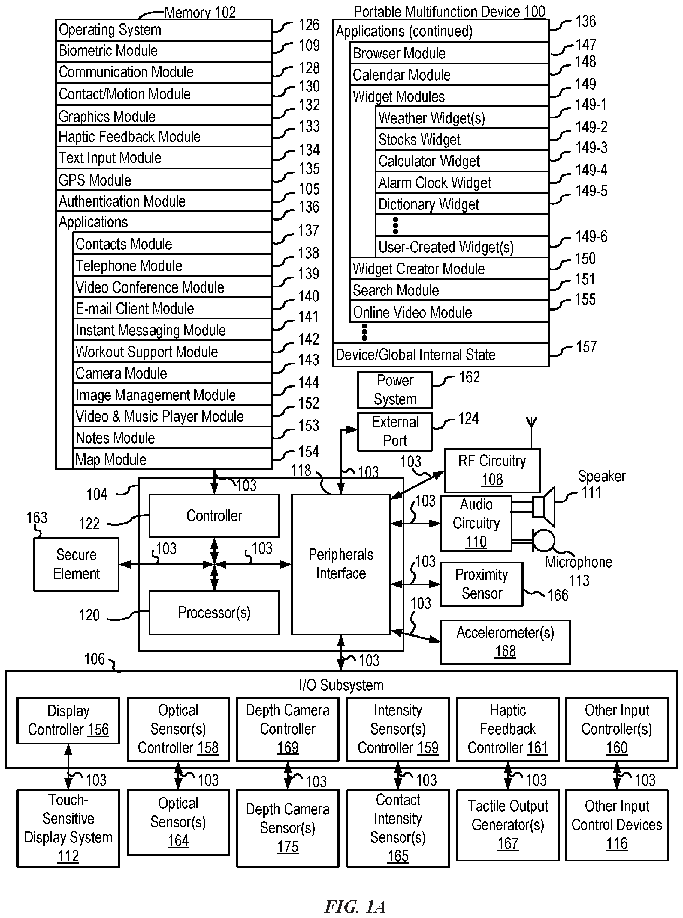

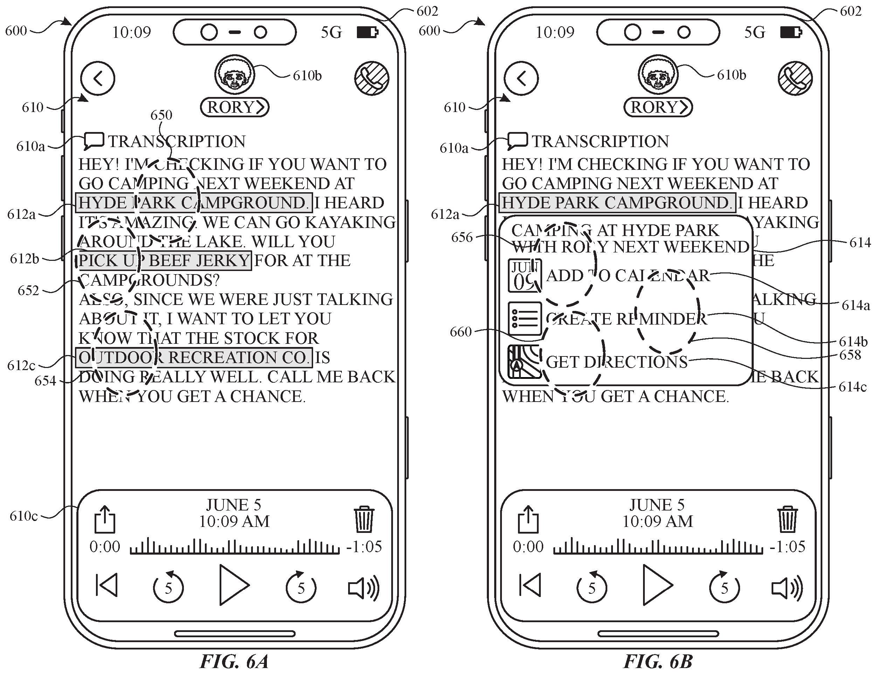

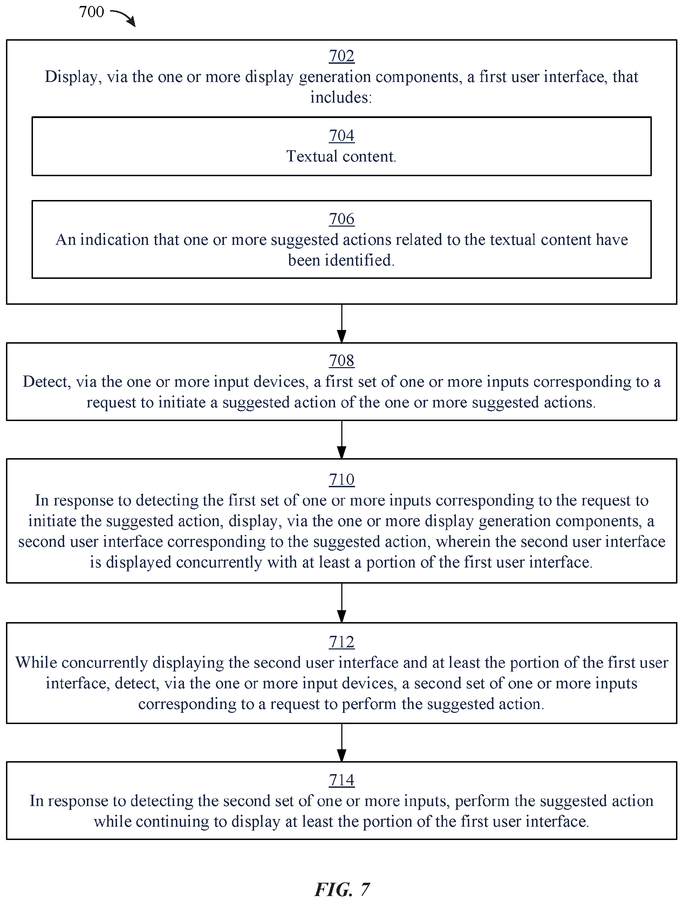

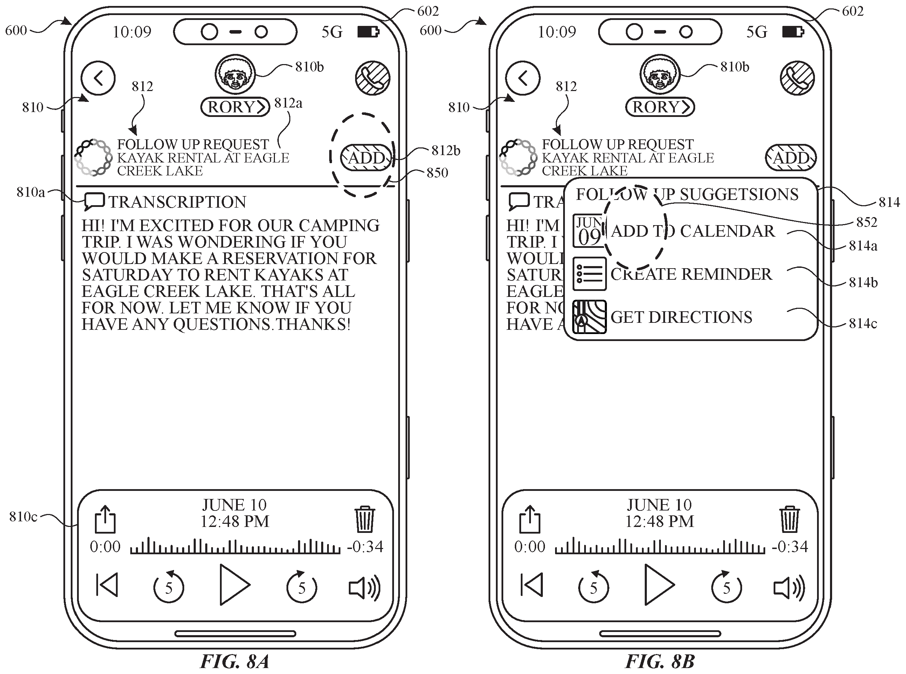

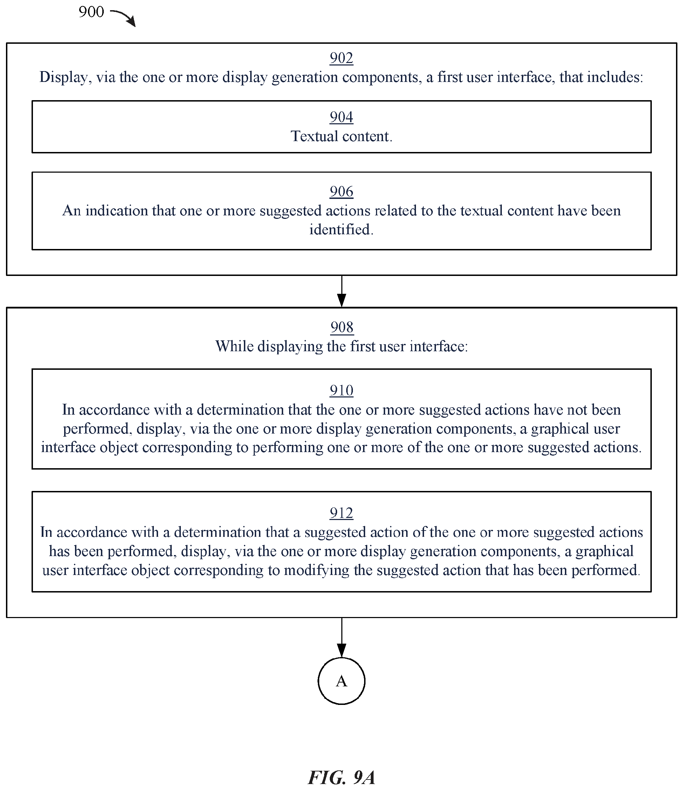

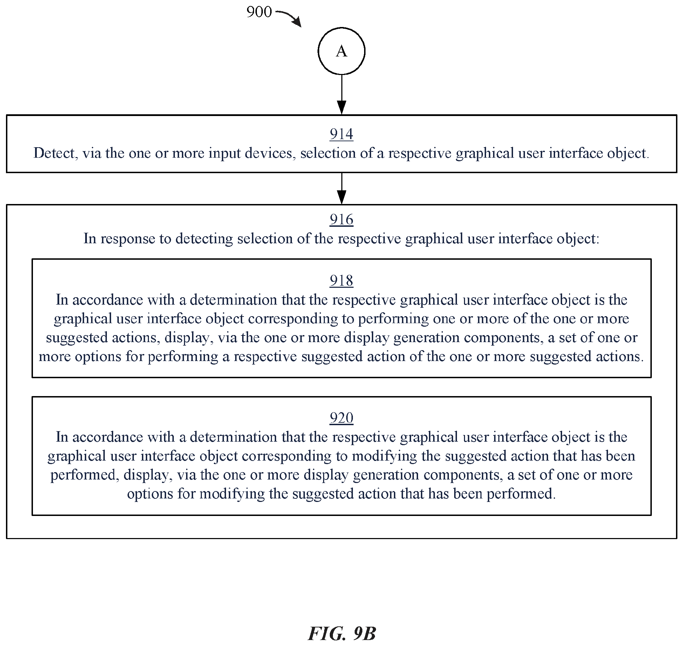

Below, FIGS. 1A-1B, 2, 3A-3G, 4A-4B, and 5A-5B provide a description of exemplary devices for performing the techniques for performing suggested actions. FIGS. 6A-6O illustrate exemplary user interfaces for performing suggested actions while displaying at least a portion of a respective user interface. FIG. 7 is a flow diagram illustrating methods of performing a suggested action while displaying at least a portion of a respective user interface in accordance with some embodiments. The user interfaces in FIGS. 6A-6O are used to illustrate the processes described below, including the processes in FIG. 7. FIGS. 8A-8L illustrate exemplary user interfaces for performing suggested actions or modifying suggested actions that have been performed. FIGS. 9A-9B are a flow diagram illustrating methods for performing a suggested action or modifying a suggested action that has been performed in accordance with some embodiments. The user interfaces in FIGS. 8A-8L are used to illustrate the processes described below, including the processes in FIGS. 9A-9B.

The processes described below enhance the operability of the devices and make the user-device interfaces more efficient (e.g., by helping the user to provide proper inputs and reducing user mistakes when operating/interacting with the device) through various techniques, including by providing improved visual feedback to the user, reducing the number of inputs needed to perform an operation, providing additional control options without cluttering the user interface with additional displayed controls, performing an operation when a set of conditions has been met without requiring further user input, and/or additional techniques. These techniques also reduce power usage and improve battery life of the device by enabling the user to use the device more quickly and efficiently.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

Although the following description uses terms "first," "second," etc. to describe various elements, these elements should not be limited by the terms. In some embodiments, these terms are used to distinguish one element from another. For example, a first touch could be termed a second touch, and, similarly, a second touch could be termed a first touch, without departing from the scope of the various described embodiments. In some embodiments, the first touch and the second touch are two separate references to the same touch. In some embodiments, the first touch and the second touch are both touches, but they are not the same touch.

As used herein, the phrase "one or more of A and/or B" is construed to include all combinations of A and B, including, but not limited to: A individually without B; B individually without A; as well as a combination of A and B. The phrase "one or more of A, B, and/or C" is construed to include all combinations of A, B, and C, including, but not limited to: A individually without B and C; B individually without A and C; C individually without A and B; as well as any combinations of A, B, and/or C (e.g., A and B without C; A and C without B; B and C without A; and/or A, B, and C). Additionally, as used herein, the phrase "selected from the group consisting of A, B, C, and a combination thereof" and the phrase "at least one of A, B, and C" shall be construed to have the same meaning as the phrase "one or more of A, B, and/or C" as defined above. As used herein, the phrase "at least one of A, B, or C" and "one or more of A, B, or C" shall be construed to have the same meaning as the phrase "one or more of A, B, and/or C" as defined above. As used herein, the phrase "a combination including all of A, B, and C" is construed to include a combination of all the elements listed (e.g., a combination of A, B, and C).

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component (e.g., a display device such as a head-mounted display (HMD), a display, a projector, a touch-sensitive display, or other device or component that presents visual content to a user, for example on or in the display generation component itself or produced from the display generation component and visible elsewhere). The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage media), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs (such as computer programs (e.g., including instructions)) and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

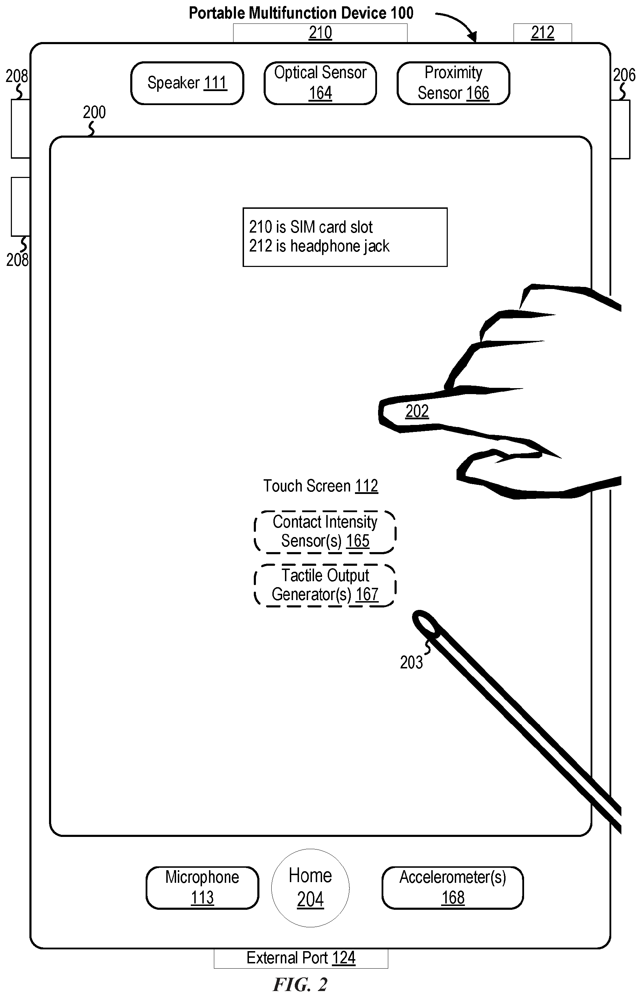

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, depth camera controller 169, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes secure element 163 for securely storing information. In some embodiments, secure element 163 is a hardware component (e.g., a secure microcontroller chip) configured to securely store data or an algorithm. In some embodiments, secure element 163 provides (e.g., releases) secure information (e.g., payment information (e.g., an account number and/or a transaction-specific dynamic security code), identification information (e.g., credentials of a state-approved digital identification), and/or authentication information (e.g., data generated using a cryptography engine and/or by performing asymmetric cryptography operations)). In some embodiments, secure element 163 provides (or releases) the secure information in response to device 100 receiving authorization, such as a user authentication (e.g., fingerprint authentication; passcode authentication; detecting double-press of a hardware button when device 100 is in an unlocked state, and optionally, while device 100 has been continuously on a user's wrist since device 100 was unlocked by providing authentication credentials to device 100, where the continuous presence of device 100 on the user's wrist is determined by periodically checking that the device is in contact with the user's skin). For example, device 100 detects a fingerprint at a fingerprint sensor (e.g., a fingerprint sensor integrated into a button) of device 100. Device 100 determines whether the detected fingerprint is consistent with an enrolled fingerprint. In accordance with a determination that the fingerprint is consistent with the enrolled fingerprint, secure element 163 provides (e.g., releases) the secure information. In accordance with a determination that the fingerprint is not consistent with the enrolled fingerprint, secure element 163 forgoes providing (e.g., releasing) the secure information.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more depth camera sensors 175. FIG. 1A shows a depth camera sensor coupled to depth camera controller 169 in I/O subsystem 106. Depth camera sensor 175 receives data from the environment to create a three dimensional model of an object (e.g., a face) within a scene from a viewpoint (e.g., a depth camera sensor). In some embodiments, in conjunction with imaging module 143 (also called a camera module), depth camera sensor 175 is optionally used to determine a depth map of different portions of an image captured by the imaging module 143. In some embodiments, a depth camera sensor is located on the front of device 100 so that the user's image with depth information is, optionally, obtained for video conferencing while the user views the other video conference participants on the touch screen display and to capture selfies with depth map data. In some embodiments, the depth camera sensor 175 is located on the back of device, or on the back and the front of the device 100. In some embodiments, the position of depth camera sensor 175 can be changed by the user (e.g., by rotating the lens and the sensor in the device housing) so that a depth camera sensor 175 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

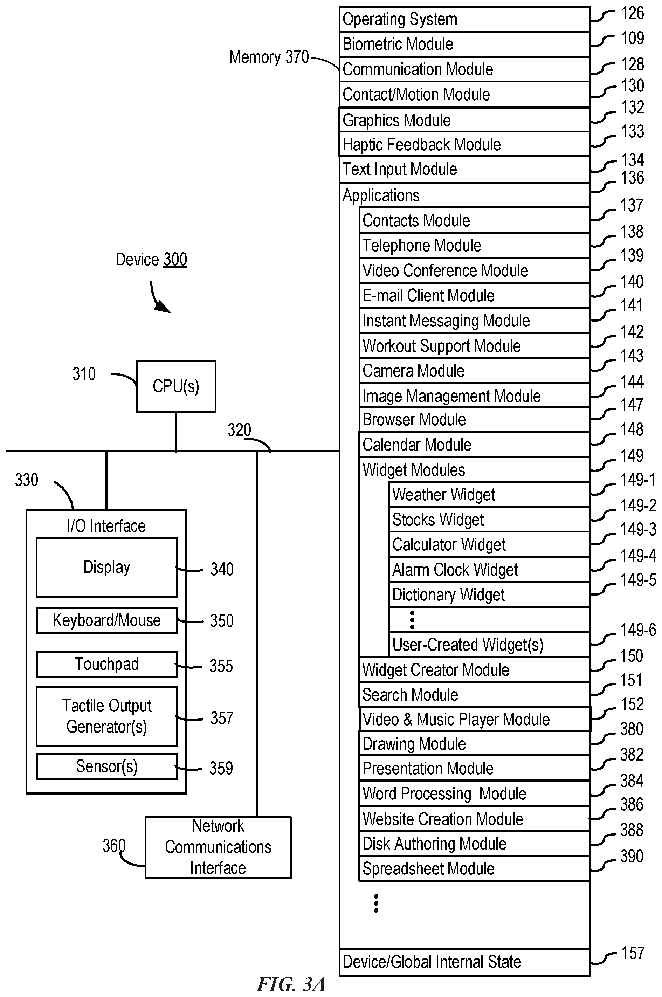

In some embodiments, the software components stored in memory 102 include operating system 126, biometric module 109, communication module (or set of instructions) 128, contact/motion module (or set of instructions) 130, graphics module (or set of instructions) 132, text input module (or set of instructions) 134, Global Positioning System (GPS) module (or set of instructions) 135, authentication module 105, and applications (or sets of instructions) 136. Furthermore, in some embodiments, memory 102 (FIG. 1A) or 370 (FIG. 3A) stores device/global internal state 157, as shown in FIGS. 1A and 3A. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE^{®}, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Biometric module 109 optionally stores information about one or more enrolled biometric features (e.g., fingerprint feature information, facial recognition feature information, eye and/or iris feature information) for use to verify whether received biometric information matches the enrolled biometric features. In some embodiments, the information stored about the one or more enrolled biometric features includes data that enables the comparison between the stored information and received biometric information without including enough information to reproduce the enrolled biometric features. In some embodiments, biometric module 109 stores the information about the enrolled biometric features in association with a user account of device 100. In some embodiments, biometric module 109 compares the received biometric information to an enrolled biometric feature to determine whether the received biometric information matches the enrolled biometric feature.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts module 137, e-mail client module 140, IM module 141, browser module 147, and any other application that needs text input).

GPS module 135 determines the location of the device and provides this information for use in various applications (e.g., to telephone module 138 for use in location-based dialing; to camera module 143 as picture/video metadata; and to applications that provide location-based services such as weather widgets, local yellow page widgets, and map/navigation widgets).

Authentication module 105 determines whether a requested operation (e.g., requested by an application of applications 136) is authorized to be performed. In some embodiments, authentication module 105 receives for an operation to be perform that optionally requires authentication. Authentication module 105 determines whether the operation is authorized to be performed, such as based on a series of factors, including the lock status of device 100, the location of device 100, whether a security delay has elapsed, whether received biometric information matches enrolled biometric features, and/or other factors. Once authentication module 105 determines that the operation is authorized to be performed, authentication module 105 triggers performance of the operation.

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone module 138, video conference module 139, e-mail client module 140, or IM module 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript^{®} file. In some embodiments, a widget includes an XML (Extensible Markup Language) file and a JavaScript^{®} file (e.g., Yahoo!^{®} Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs (such as computer programs (e.g., including instructions)), procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

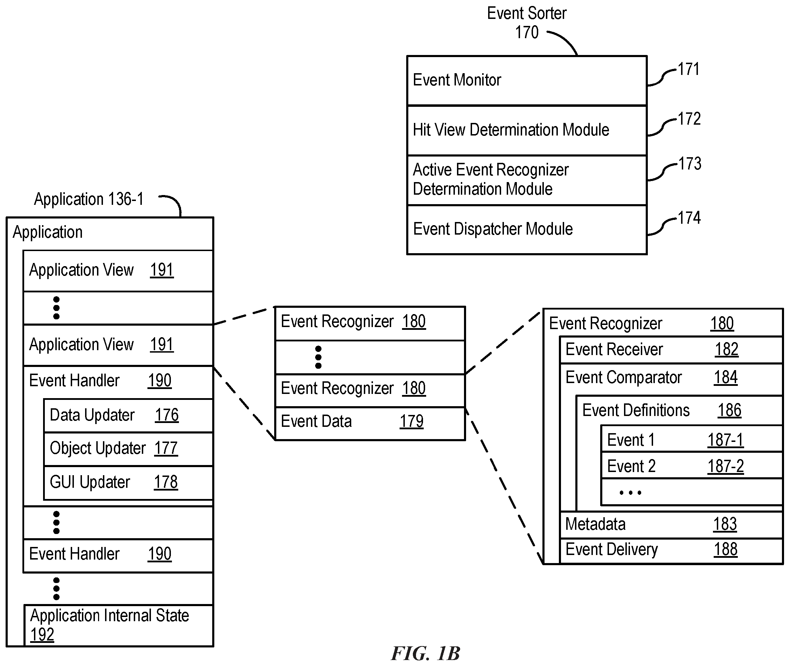

FIG. 1B is a block diagram illustrating exemplary components for event handling in accordance with some embodiments. In some embodiments, memory 102 (FIG. 1A) or 370 (FIG. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (e.g., 187-1 and/or 187-2) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definitions 186 include a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3A is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3A is, optionally, stored in one or more of the previously mentioned memory devices. Each of the above-identified modules corresponds to a set of instructions for performing a function described above. The above-identified modules or computer programs (e.g., sets of instructions or including instructions) need not be implemented as separate software programs (such as computer programs (e.g., including instructions)), procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

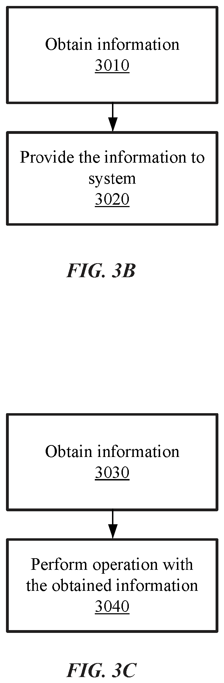

Implementations within the scope of the present disclosure include a computer-readable storage medium that encodes instructions organized as an application (e.g., application 3160) that, when executed by one or more processing units, control an electronic device (e.g., device 3150) to perform the method of FIG. 3B, the method of FIG. 3C, and/or one or more other processes and/or methods described herein.

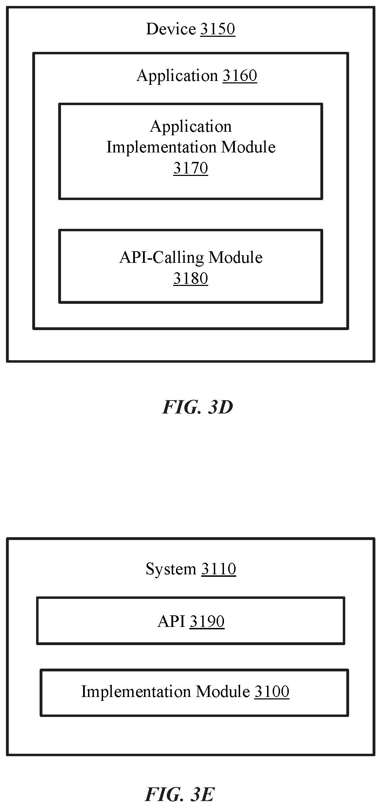

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first-party application). In some embodiments, application 3160 is an application that is provided to device 3150 via an operating system update file (e.g., a first-party application or a second-party application). In some embodiments, application 3160 is an application that is provided via an application store. In some embodiments, the application store can be an application store that is pre-installed on device 3150 at purchase (e.g., a first-party application store). In some embodiments, the application store is a third-party application store (e.g., an application store that is provided by another application store, downloaded via a network, and/or read from a storage device).

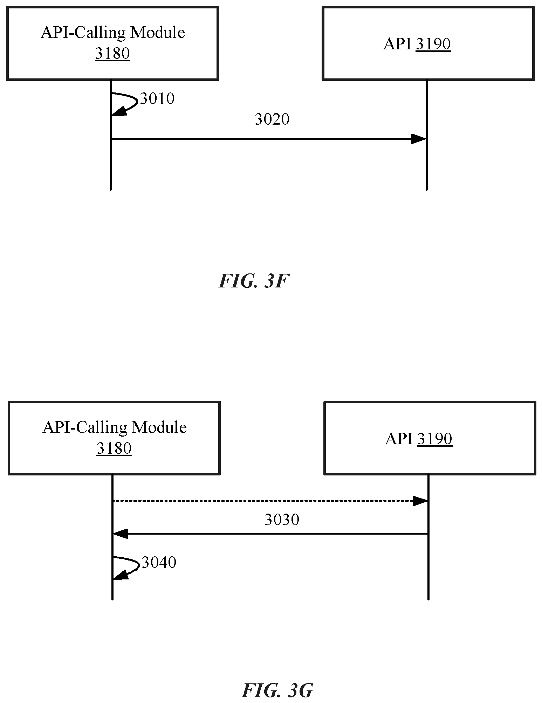

Referring to FIG. 3B and FIG. 3F, application 3160 obtains information (e.g., 3010). In some embodiments, at 3010, information is obtained from at least one hardware component of device 3150. In some embodiments, at 3010, information is obtained from at least one software module of device 3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application 3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the method of FIG. 3B and/or the method of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the method of FIG. 3B and/or the method of FIG. 3C by calling an application programming interface (API) (e.g., API 3190) provided by system 3110. In some embodiments, application 3160 performs at least a portion of the method of FIG. 3B and/or the method of FIG. 3C without calling API 3190.

In some embodiments, one or more steps of the method of FIG. 3B and/or the method of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments, the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor, and/or biometric sensor.

In some embodiments, implementation module 3100 is a system (e.g., operating system and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third-party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example, when an input is detected the direct sensor data is frequently processed into one or more input events that are provided (e.g., via an API) to a receiving software process that makes some determination based on the input events, and then sends (e.g., via an API) information to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first-party application). In some embodiments, the application is an application that is provided to the first computer system via an operating system update file (e.g., a first-party application). In some embodiments, the application is an application that is provided via an application store. In some embodiments, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform method 700 and/or 900 (FIGS. 7 and/or FIGS. 9A-9B) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module 3180) to access and use one or more functions, methods, procedures, data structures, classes, and/or other services provided by an implementation module of the system process. The API can define one or more parameters that are passed between the API-calling module and the implementation module. In some embodiments, API 3190 defines a first API call that can be provided by API-calling module 3180. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

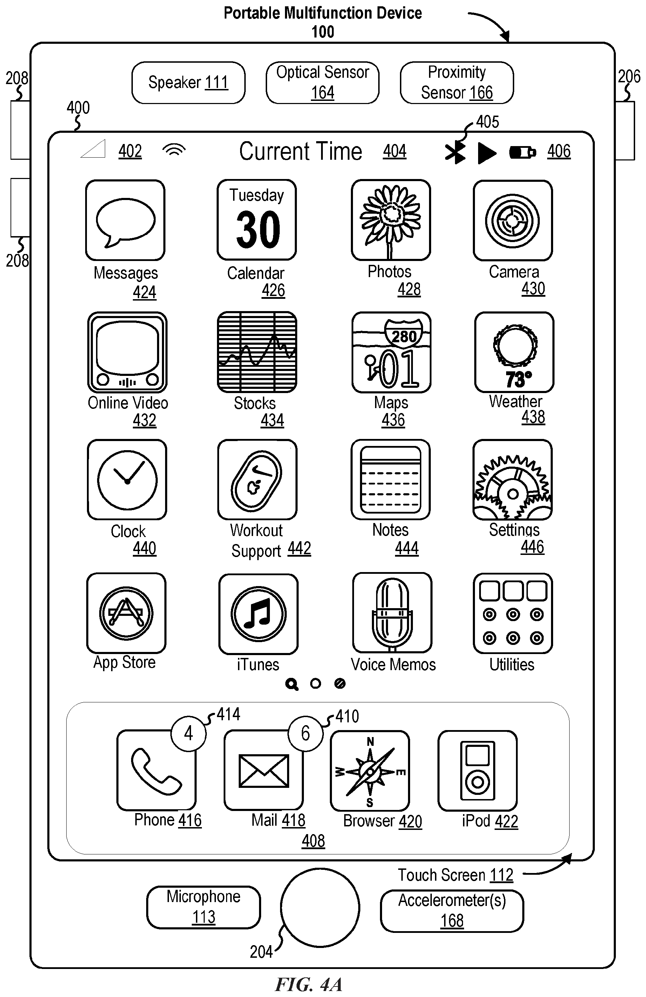

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ∘ Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser;" and
   ∘ Icon 422 for video and music player module 152, also referred to as iPod (trademark of Apple Inc.) module 152, labeled "iPod;" and
- Icons for other applications, such as:
   ∘ Icon 424 for IM module 141, labeled "Messages;"
   ∘ Icon 426 for calendar module 148, labeled "Calendar;"
   ∘ Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Maps;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   ∘ Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

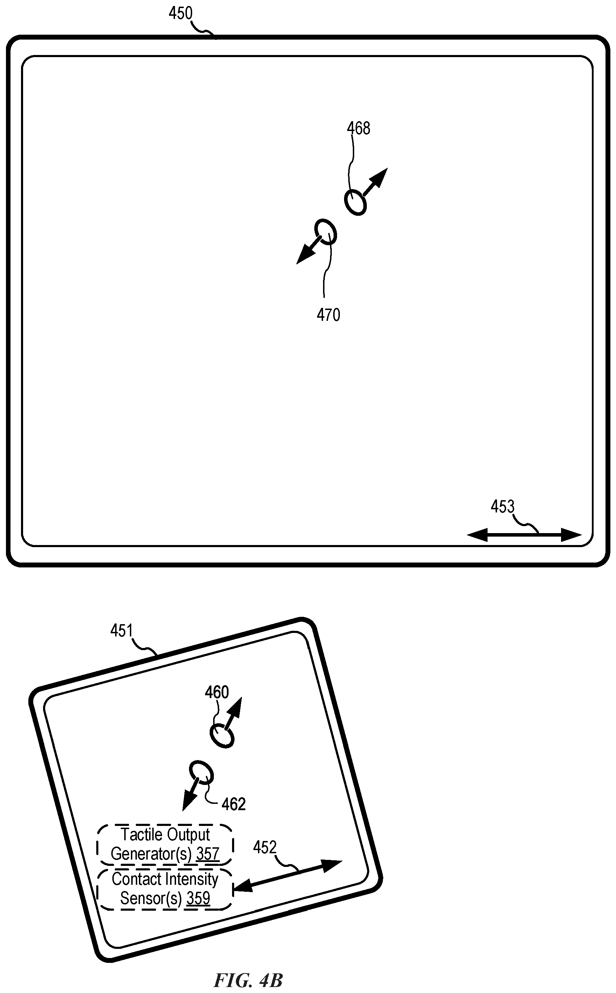

FIG. 4B illustrates an exemplary user interface on a device (e.g., device 300, FIG. 3A) with a touch-sensitive surface 451 (e.g., a tablet or touchpad 355, FIG. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., touch-sensitive surface 451 in FIG. 4B) has a primary axis (e.g., 452 in FIG. 4B) that corresponds to a primary axis (e.g., 453 in FIG. 4B) on the display (e.g., display 450). In accordance with these embodiments, the device detects contacts (e.g., contact 460 and contact 462 in FIG. 4B) with the touch-sensitive surface 451 at locations that correspond to respective locations on the display (e.g., in FIG. 4B, contact 460 corresponds to 468 and contact 462 corresponds to 470). In this way, user inputs (e.g., contact 460 and contact 462, and movements thereof) detected by the device on the touch-sensitive surface (e.g., touch-sensitive surface 451 in FIG. 4B) are used by the device to manipulate the user interface on the display (e.g., display 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

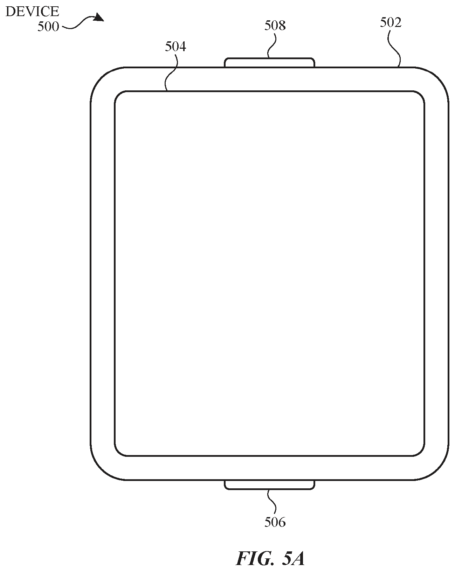

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276, each of which is hereby incorporated by reference in their entirety.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

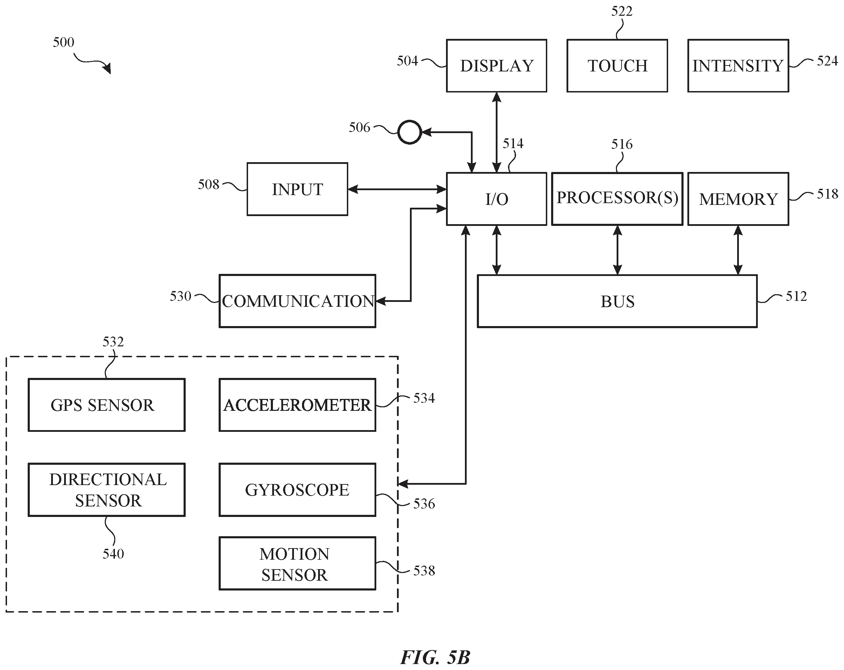

FIG. 5B depicts exemplary personal electronic device 500. In some embodiments, device 500 can include some or all of the components described with respect to FIGS. 1A, 1B, and 3A. Device 500 has bus 512 that operatively couples I/O section 514 with one or more computer processors 516 and memory 518. I/O section 514 can be connected to display screen 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage media, for storing computer-executable instructions, which, when executed by one or more computer processors 516, for example, can cause the computer processors to perform the techniques described below, including processes 700 and/or 900 (FIGS. 7 and/or FIGS. 9A-9B). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray^{®} technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3A, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3A or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

As described herein, content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally includes visual content (e.g., images, graphics, and/or video), audio content, and/or text content.

In some embodiments, novel automatically-generated content that is generated via one or more artificial intelligence (AI) processes is referred to as generative content (e.g., generative images, generative graphics, generative video, generative audio, and/or generative text). Generative content is typically generated by an AI process based on a prompt that is provided to the AI process. An AI process typically uses one or more AI models to generate an output based on an input. An AI process optionally includes one or more pre-processing steps to adjust the input before it is used by the AI model to generate an output (e.g., adjustment to a user-provided prompt, creation of a system-generated prompt, and/or AI model selection). An AI process optionally includes one or more post-processing steps to adjust the output by the AI model (e.g., passing AI model output to a different AI model, upscaling, downscaling, cropping, formatting, and/or adding or removing metadata) before the output of the AI model used for other purposes such as being provided to a different software process for further processing or being presented (e.g., visually or audibly) to a user. An AI process that generates generative content is sometimes referred to as a generative AI process.

A prompt for generating generative content can include one or more of: one or more words (e.g., a natural language prompt that is written or spoken), one or more images, one or more drawings, and/or one or more videos. AI processes can include machine learning models including neural networks. Neural networks can include transformer-based deep neural networks such as large language models (LLMs). Generative pre-trained transformer models are a type of LLM that can be effective at generating novel generative content based on a prompt. Some AI processes use a prompt that includes text to generate either different generative text, generative audio content, and/or generative visual content. Some AI processes use a prompt that includes visual content and/or an audio content to generate generative text (e.g., a transcription of audio and/or a description of the visual content). Some multi-modal AI processes use a prompt that includes multiple types of content (e.g., text, images, audio, video, and/or other sensor data) to generate generative content. A prompt sometimes also includes values for one or more parameters indicating an importance of various parts of the prompt. Some prompts include a structured set of instructions that can be understood by an AI process that include phrasing, a specified style, relevant context (e.g., starting point content and/or one or more examples), and/or a role for the AI process.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt could request that a block of text be summarized or rewritten in a different tone, and the output would be generative text that is summarized or written in the different tone. Similarly, a prompt could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt for creating generative content (e.g., the random or pseud-random seed content is used as a starting point for creating the generative content). For example, when generating an image from a diffusion model, a random noise pattern is iteratively denoised based on the prompt to generate an image that is based on the prompt. While specific types of AI processes have been described herein, it should be understood that a variety of different AI processes could be used to generate generative content based on a prompt.

Attention is now directed towards embodiments of user interfaces ("UI") and associated processes that are implemented on an electronic device, such as portable multifunction device 100, device 300, or device 500.

FIGS. 6A-6O illustrate exemplary user interfaces for performing suggested actions while displaying at least a portion of a respective user interface, in accordance with some embodiments. The user interfaces in these figures are used to illustrate the processes described below, including the processes in FIG. 7.

FIG. 6A illustrates computer system 600, which includes one or more display generation components, such as display 602. Additionally, computer system 600 includes one or more input devices. In the example shown in FIG. 6A, display 602 includes a touch-sensitive surface that is an input device. In FIG. 6A, computer system 600 is a smart phone. In some embodiments, computer system 600 is a tablet computer, a laptop computer, a desktop computer, a smart speaker, a head-mounted device, and/or a smartwatch. In some embodiments, computer system 600 includes one or more features of devices 100, 300, and/or 500.

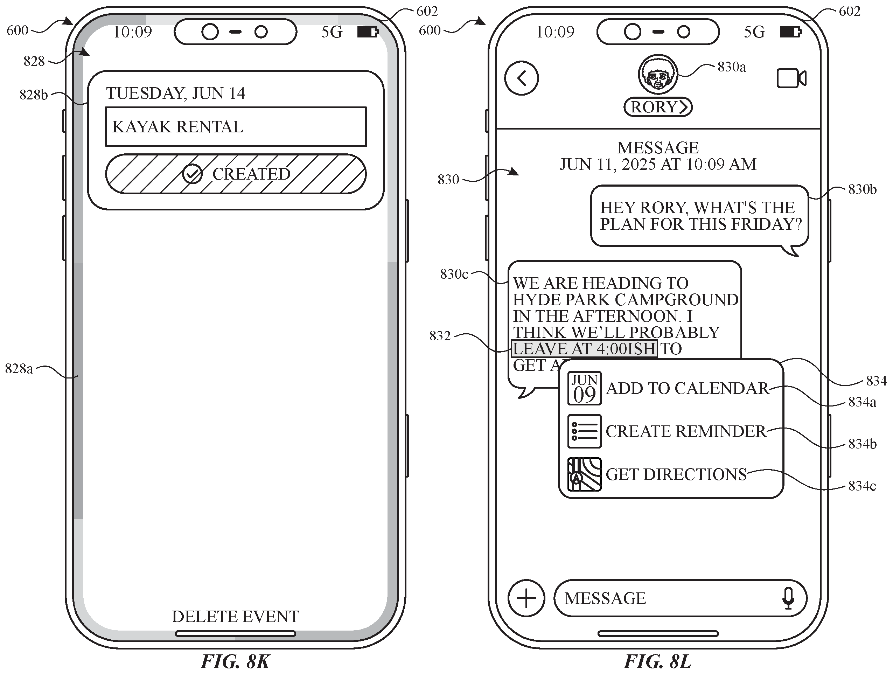

In FIG. 6A, computer system 600 displays user interface 610, which is a user interface for a voicemail application. User interface 610 includes transcript 610a of a voicemail received by computer system 600. In the example shown in FIG. 6A, the voicemail was left by contact 610b (e.g., "RORY", a contactable user). User interface 610 includes controls pertaining to the voicemail, including control panel 610c, which displays details regarding the voicemail and enables a user to listen to the voicemail recording and perform other actions. In some embodiments, computer system 600 displays a different user interface that includes textual content, such as a communication user interface that includes a text message conversation and/or an email thread or a media user interface that includes one or more articles, posts, and/or written summaries, as discussed in more detail below with respect to FIG. 8L.

As shown in FIG. 6A, portions of transcript 610a include a visual indication, which indicates that suggested actions have been identified related to the textual content of transcript 610a. For example, FIG. 6A includes indication 612a ("HYDE PARK CAMPGROUND"), indication 612b ("PICK UP BEEF JERKY"), and indication 612c ("OUTDOOR RECREATION CO."). In some embodiments, the visual indication includes highlighting, coloring, underlining, and/or bolding. In some embodiments, the visual indication is dynamic. For example, a highlight changes colors over time, such as cycling through the colors of the rainbow at different times and/or at different portions of the highlighted text. In some embodiments, the visual indications are displayed, as shown in FIG. 6A, when computer system 600 displays user interface 610 (e.g., in response to a request to display user interface 610). In some embodiments, user interface 610 is initially displayed without the visual indications, and computer system 600 subsequently displays indication 612a, indication 612b, and indication 612c. In some embodiments, computer system 600 animates the appearance of the visual indications.

In some embodiments, computer system 600 identifies suggested actions related to the textual content of transcript 610a based on the identification of certain categories of information within the textual content. For example, computer system 600 identifies people (e.g., Rory), entities (e.g., Outdoor Recreation Co.), places and/or locations (e.g., Hyde Park Campgrounds), dates and/or times (e.g., next weekend), actions (e.g., pick up beef jerky), and/or activities (e.g., camping), and computer system 600 identifies suggested actions based on the text identified in these categories. In some embodiments, the suggested actions are identified, based on the textual content, using deterministic rules, machine learning, and/or one or more language models or other artificial intelligence models. For example, a suggested action associated with the location Hyde Park Campground includes viewing directions to Hyde Memorial State Park. As another example, a suggested action associated with picking up beef jerky includes adding beef jerky to a grocery list.

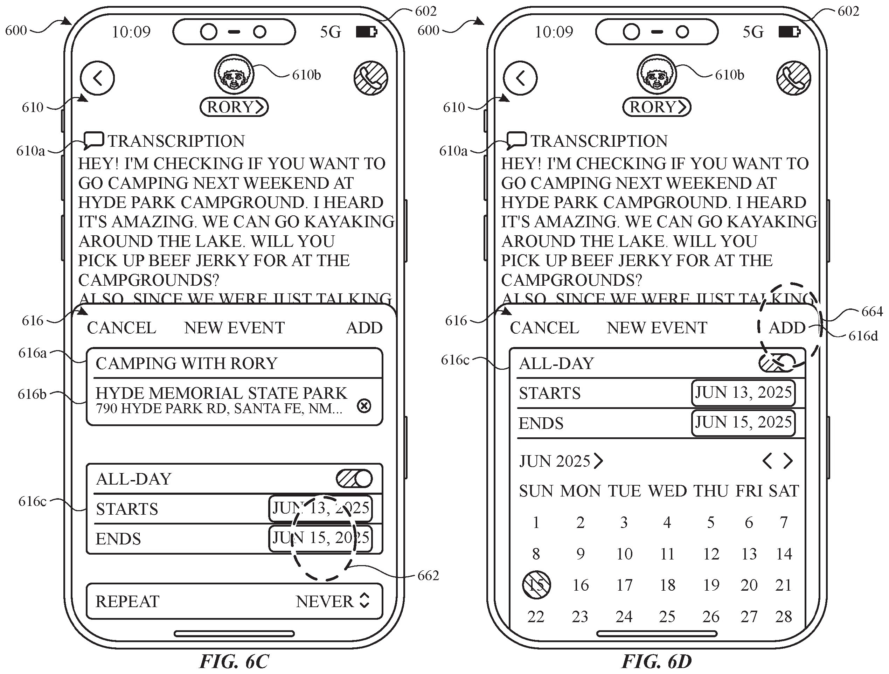

In the example illustrated in FIG. 6A, computer system 600 displays a visual indication proximate to a relevant portion of text. For example, in FIG. 6A, computer system 600 displays indication 612a corresponding to Hyde Park Campground, indication 612b corresponding to picking up beef jerky, and indication 612c corresponding to Outdoor Recreation Co. In some embodiments, the determined relevance for a portion of text is based on the category of text. For example, indication 612a indicates that there are suggested actions relating to camping at Hyde Park Campground and indication 612a is shown proximate to the text "Hyde Park Campground" because "Hyde Park Campground" was identified as a location. In some embodiments, the determined relevance for a portion of text is based on semantic similarity. For example, for a suggested action of viewing driving directions to Hyde Memorial State Park (e.g., illustrated in FIG. 6C), the indication is shown proximate to the text "HYDE PARK CAMPGROUNDS" based on the semantic similarity between Hyde Park Campgrounds and Hyde Memorial State Park.

In some embodiments, the suggested actions are identified using a deterministic approach. For example, in some embodiments, a set of rules is used to identify suggested actions based on the textual content (e.g., transcript 610a). For example, a rule could specify that, if the textual content includes a location, one of the possible suggested actions is viewing driving directions. As another example, a rule could specify that, if the textual content includes a date, one of the possible suggested actions is creating an event.

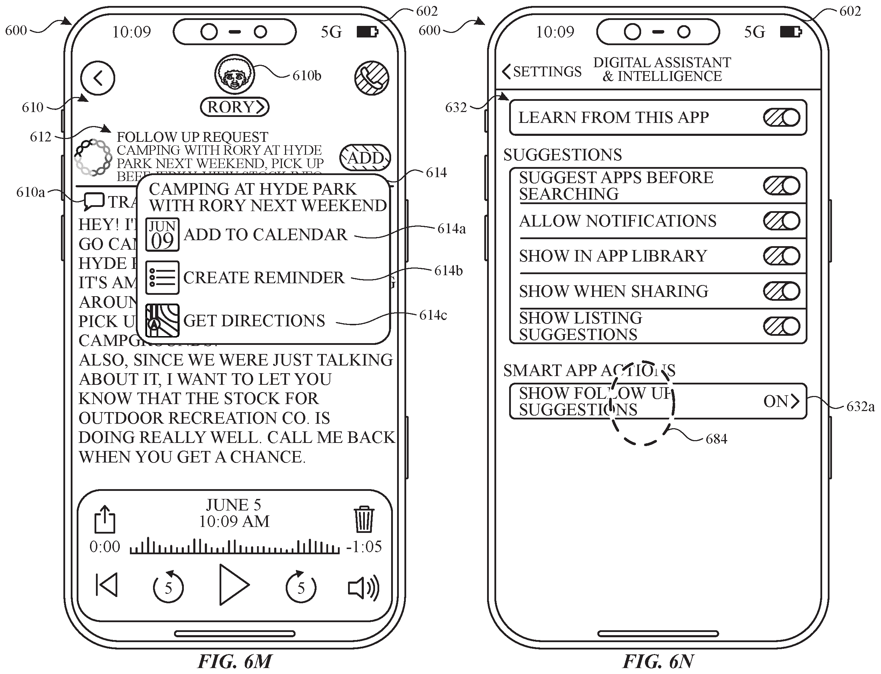

In some embodiments, the suggested actions are identified by one or more artificial intelligence models. For example, in some embodiments, a global model (e.g., a public and/or widely available model) is used to identify suggested actions based on the textual content (e.g., transcript 610a). In some embodiments, a user-specific model refines and/or prioritizes suggested actions. For example, a user-specific model accounts for user preferences and patterns of behavior to identify suggested actions a user is likely to take. In some embodiments, both the global model and the user-specific model are used to identify one or more suggested actions. In some embodiments, suggested actions are identified based on user-selected settings, as discussed in more detail below with respect to FIGS. 6N-6O. For example, if a user selects not to show suggested actions for events, computer system 600 does not display suggested actions pertaining to creating or modifying events. As another example, if a user selects a default application, computer system 600 will show suggested actions that use the selected default application (e.g., as opposed to a system application had the user not specified a default application).

A user can select a visual indication in order to view the suggested actions. For example, in response to input 650 on indication 612a in FIG. 6A, computer system 600 displays suggested action menu 614, as shown in FIG. 6B. Suggested action menu 614 includes three suggested actions that were identified relating to camping at Hyde Park Campground: suggested action 614a ("ADD TO CALENDAR"), suggested action 614b ("CREATE REMINDER"), and suggested action 614c ("GET DIRECTIONS"). In some embodiments, one or more inputs described herein with respect to the embodiments of FIGS. 6A-6O and/or FIGS. 8A-8L can be one or more of a touch gesture (e.g., a tap or a swipe), a hardware input actuation (e.g., pressing a button or a key), an air gesture (e.g., an air pinch or air swipe), and/or a gaze gesture (e.g., directing sustained attention at an element of interest).

In response to input 656 on suggested action 614a ("ADD TO CALENDAR"), computer system 600 displays new event interface 616, as shown in FIG. 6C. New event interface 616 includes information that is prepopulated based on information identified in transcript 610a. For example, title 616a is populated with "CAMPING WITH RORY" based on contact 610b and information regarding camping in transcript 610a. Location 616b is populated with "HYDE MEMORIAL STATE PARK" and the associated address based on the reference to Hyde Park Campground identified in transcript 610a. Similarly, date 616c is populated with "JUN 13, 2025" through "JUN 15, 2025" based on the current date and the reference to next weekend in transcript 610a.

As illustrated in FIG. 6D, new event interface 616 enables a user to make changes and edit the event before adding it to the calendar. In response to input 662 on date 616c, computer system 600 displays an expanded calendar view that enables a user to change the date. As shown in FIG. 6B, suggested action menu 614 is displayed concurrently with at least a portion of user interface 610. Similarly, as shown in FIGS. 6C and 6D, new event interface 616 is displayed concurrently with at least a portion of user interface 610. Accordingly, a user is able to view and perform a suggested action without navigating away from user interface 610.

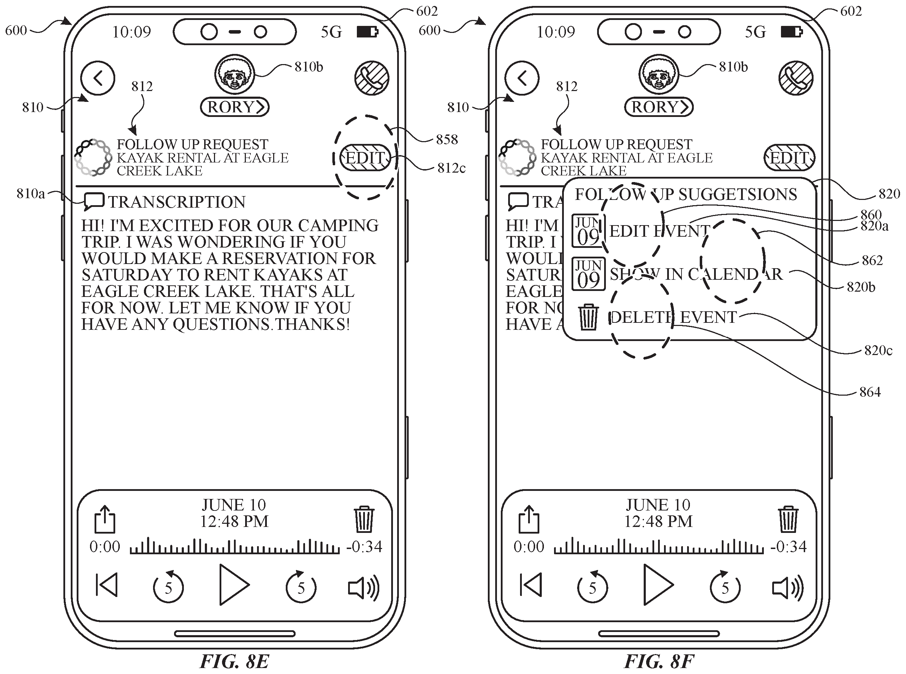

In response to input 664 on add button 616d, computer system 600 saves the event to the calendar application (and, in some embodiments, displays user interface 610 as shown in FIG. 6A). In some embodiments, after a suggested action has been performed, computer system 600 displays an indication that the suggested action has been performed, as discussed in more detail with respect to FIG. 8E.

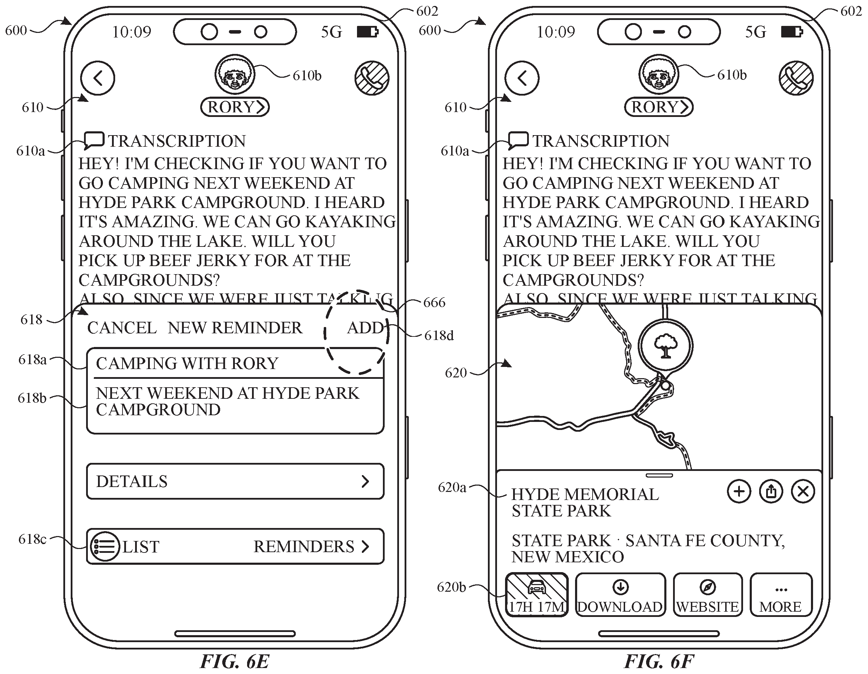

In response to input 658 on suggested action 614b ("CREATE REMINDER"), computer system 600 displays new reminder interface 618, as shown in FIG. 6E. Similar to new event interface 616 in FIG. 6C, new reminder interface 618 is prepopulated based on information from transcript 610a. Title 618a is populated with "CAMPING WITH RORY," notes field 618b is populated with "NEXT WEEKEND AT HYDE PARK CAMPGROUND," and list 816c is set to "REMINDERS." In response to input 666 on add button 618d, computer system saves the reminder (and, in some embodiments, displays user interface 610 as shown in FIG. 6A).

In response to input 660 on suggested action 614c ("GET DIRECTIONS"), computer system 600 displays maps interface 620, as shown in FIG. 6F. Maps interface 620 includes information based on the location identified in transcript 610a. For example, transcript 610a includes a reference to Hyde Park Campground, so maps interface 620 includes location information 620a including the location name and a map for Hyde Memorial State Park. Maps interface 620 includes directions option 620b, which enables a user to view directions to Hyde Memorial State Park.

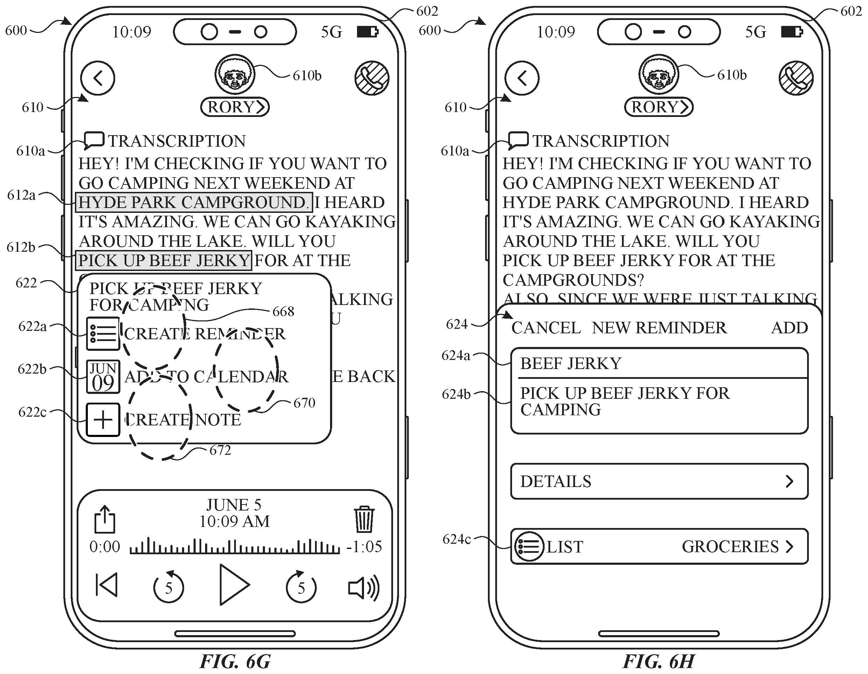

A user is able to view suggested action relating to each visual indication. In response to input 652 on indication 612b ("PICK UP BEEF JERKY"), computer system 600 displays suggested action menu 622, as shown in FIG. 6G. Suggested action menu 622 includes options relating to picking up beef jerky, which are different from the options relating to camping shown in suggested action menu 614. Notably, although suggested action menu 614 and suggested action menu 622 both include an option to add an event to the calendar and an option to add a reminder, the order is different. As illustrated in FIG. 6G, computer system 600 determined that the user is more likely to create a reminder to pickup beef jerky than to create a calendar event, so suggested action 622a is displayed before suggested action 622b (as opposed to in FIG. 6B, wherein computer system 600 determined that the user is more likely to create a calendar event for camping at Hyde Park than a reminder, so suggested action 614a is displayed before suggested action 614b).

In response to input 668 on suggested action 622a, computer system 600 displays new reminder interface 624, as shown in FIG. 6H. Similar to new reminder interface 618 in FIG. 6E, new reminder interface 624 is prepopulated with information, including title 624a, notes field 624b, and list 624c. Notably, "GROCERIES" is selected as list 624c because computer system 600 identified that the reminder should be added to the grocery list based on the context in transcript 610a. In response to input 670 on suggested action 622b, computer system 600 displays a new event interface, similar to new event user interface 616 shown in FIG. 6C. Similarly, in response to input 672 on suggested action 622c, computer system 600 displays a new note interface.

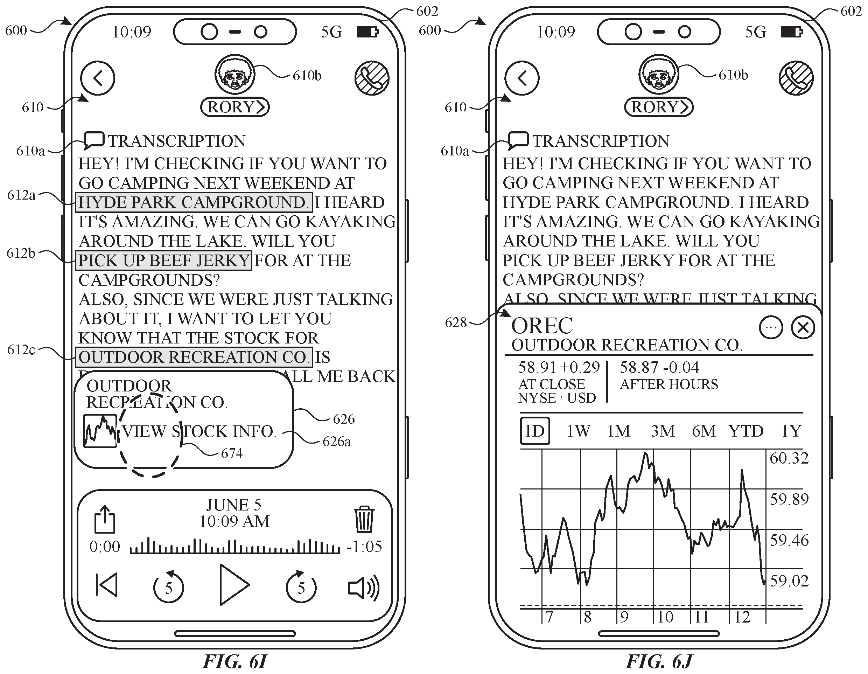

In response to input 654 on indication 612c ("OUTDOOR RECREATION CO."), computer system 600 displays suggested action menu 614, as shown in FIG. 6I. In the example shown in FIG. 6I, only one suggested action is available. Suggested action menu 626 includes suggested action 626a ("VIEW STOCK INFO") based on the reference to stock performance of Outdoor Recreation Co. in transcript 610a. In response to input 674 on suggested action 626a, computer system 600 displays stock information interface 628 for Outdoor Recreation Co., as shown in FIG. 6J, which includes details regarding the stock performance and selectable options, such as options for changing the time period for which the stock information is displayed.

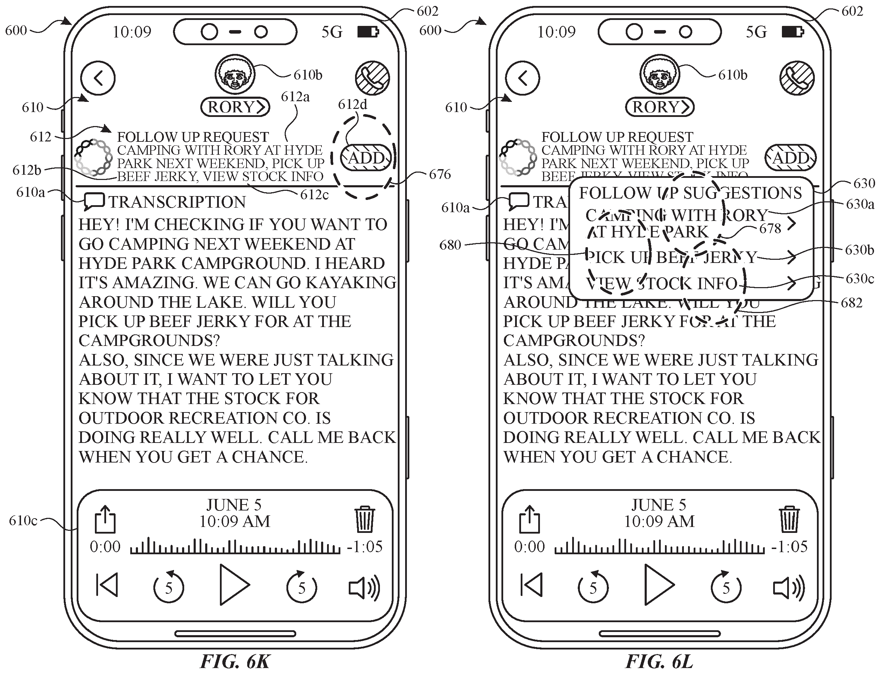

FIG. 6K illustrates an alternative embodiment for displaying a visual indication of suggested actions. In FIG. 6K, computer system 600 displays the visual indication of suggested actions, indication 612, as a notification or banner at the top of user interface 610. Indication 612 includes indication 612a ("CAMPING WITH RORY AT HYDE PARK"), indication 612b ("PICK UP BEEF JERKY"), and indication 612c ("VIEW STOCK INFO") corresponding to different sets of suggested actions, which are the same indications shown in FIG. 6A but in a different format. Additionally, indication 612 includes add button 612d for viewing and performing the suggested actions.

In response to input 676 on add button 612d, computer system 600 displays suggested options menu 630, as shown in FIG. 6L. Suggested options menu 630 includes relevant information from transcript 610a for which suggested actions are available, including suggested option 630a ("CAMPING WITH RORY AT HYDE PARK"), suggested option 630b ("PICK UP BEEF JERKY"), and suggested option 630c ("VIEW STOCK INFO"). Suggested options 630a-630c correspond to indications 612a-612c shown in FIG. 6A.

In response to input 678 on suggested option 630a, computer system 600 displays suggested action menu 614, as shown in FIG. 6M, which is the same as suggested action menu 614 shown in FIG. 6B. Similarly, in response to input 680 on suggested option 630b, computer system 600 displays suggested action menu 622, as shown in FIG. 6G. In response to input 682 on suggested option 630c, computer system 600 displays suggested action menu 626, as shown in FIG. 6I. A user can make selections and perform suggested actions from the interfaces shown in FIGS. 6K-6M in a similar manner to as described with respect to FIGS. 6A-6J.

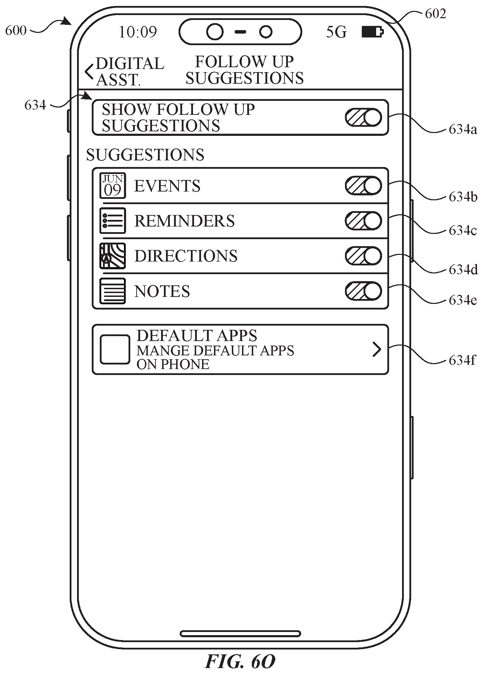

In some embodiments, the identification of suggested actions and the relevant portions of text are based in part on user-configured settings. FIG. 6N illustrates settings interface 632, which includes a variety of options pertaining to settings for suggestions. Settings interface 632 includes options 632a, which enables a user to configure whether to show suggested actions (e.g., follow up suggestions). In response to input 684 on option 632a, computer system 600 displays settings interface 634, as shown in FIG. 6O. Settings interface 634 includes toggle 634a for turning display of suggested actions on or off. Settings interface 634 includes toggles for showing suggestions for particular categories of suggestions, including events toggle 634b, reminders toggle 634c, directions toggle 634d, and notes toggle 634e. In response to an input on one of the toggles, computer system 600 switches between showing or not showing suggested actions for the corresponding category of suggested actions. For example, if a user of computer system 600 turns off event option 634b, computer system 600 will no longer display suggested actions for adding or modifying events in the calendar.

As shown in FIG. 6O, settings user interface 634 includes default apps option 634f, which enables a user to view and change default application settings. In some embodiments, the identification of suggested actions is based in part on user-selected default applications. For example, if a user selects a particular application as the default maps and/or navigation application, computer system 600 will display suggested actions corresponding to the particular application when displaying suggested actions for viewing directions. In some embodiments, computer system 600 will display suggested actions corresponding to third-party applications based on the user-selected default applications. For example, if a user selects a third-party application as the default map and/or navigation application, computer system 600 will display suggested actions corresponding to the third-party application.

FIG. 7 is a flow diagram illustrating a method for displaying a user interface for performing suggested actions while displaying at least a portion of a respective user interface using a computer system in accordance with some embodiments. Method 700 is performed at a computer system (e.g., 100, 300, 500, 600, a smart phone, a smart watch, a head-mounted device, a tablet computer, a personal computer, and/or a digital media player) that is in communication with one or more display generation components (e.g., 602, a display controller, a touch-sensitive display system, a display (e.g., integrated and/or connected), a 3D display, a transparent display, a projector, a heads-up display, and/or a head-mounted display) and one or more input devices (e.g., 602, a touch-sensitive surface, a button, a mouse, a keyboard, a joystick, a camera sensor, a microphone, and/or a motion sensor). Some operations in method 700 are, optionally, combined, the orders of some operations are, optionally, changed, and some operations are, optionally, omitted.

As described below, method 700 provides an intuitive way for performing suggested actions while displaying at least a portion of a respective user interface. The method reduces the cognitive burden on a user for performing suggested actions, thereby creating a more efficient human-machine interface. For battery-operated computing devices, enabling a user to perform suggested actions faster and more efficiently conserves power and increases the time between battery charges.

The devices, methods, and/or computer-readable storage mediums described below enhance the operability of the device and make the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. Displaying a user interface corresponding to a suggested action while continuing to display at least a portion of the first user interface enables a user to view information related to the suggested action without navigating away from the first user interface. Displaying a user interface corresponding to performing a suggested action while continuing to display at least a portion of the first user interface enables a user to initiate performing the suggested action without navigating away from the first user interface.

Providing improved feedback (such as by displaying an indication that suggested actions related to the textual content have been identified, displaying the indication with an appearance that changes over time, displaying the indication proximate to a relevant portion of the textual content, and displaying an indication that a suggested action has been performed) enhances the operability of the device by reducing accidental and mistaken inputs, reducing energy usage by the device. Reducing the number of inputs needed to perform an operation (such as by displaying an indication that suggested actions related to textual content have been identified) enhances the operability of the device by reducing the number of inputs and time required to perform a particular operation, reducing energy usage by the device. Performing an operation when a set of conditions has been met without requiring further user input (such as by displaying a suggested action based on user-selected categories of suggested actions, displaying one or more suggested actions based on the textual content including a first category of text, identifying suggested actions using artificial intelligence models, identifying suggested actions using a first model and refining the suggested actions using a second model, and displaying information in the second user interface based on information in the textual content) enhances the operability of the device by reducing unnecessary inputs and/or steps to navigate through different user interfaces or sets of controls, reducing energy usage by the device.

The computer system displays (702), via the one or more display generation components, a first user interface (e.g., 610 and/or an application user interface, such as for a voicemail application, a messaging application, and/or a communication application), that includes textual content (704) (e.g., 610a, a communication, message, notification, article, summary, and/or a transcript thereof) and an indication (706) (e.g., 612, 612a, 612b, 612c, and/or a visual indication) that one or more suggested actions related to the textual content (e.g., actions that a user of the computer system is likely to take based on the textual content and/or actions that are likely to be helpful for the user based on the textual content, such as creating a reminder associated with the textual content) have been identified (e.g., by the computer system, a digital assistant, an artificial intelligence model, and/or a combination thereof).

The computer system detects (708), via the one or more input devices, a first set of one or more inputs (e.g., user selections and/or actions, such as 656) corresponding to a request to initiate a suggested action of the one or more suggested actions. In response to detecting the first set of one or more inputs corresponding to the request to initiate the suggested action, the computer system displays (710), via the one or more display generation components, a second user interface (e.g., 616, an information user interface and/or a second application user interface) corresponding to the suggested action, wherein the second user interface is displayed concurrently with (e.g., overlaid on and/or overlapping a portion of) at least a portion of the first user interface.

While concurrently displaying the second user interface and at least the portion of the first user interface, the computer system detects (712), via the one or more input devices, a second set of one or more inputs (e.g., user selections and/or actions, such as 662 and/or 664) corresponding to a request to perform the suggested action. In response to detecting the second set of one or more inputs, the computer system performs (714) the suggested action while continuing to display at least the portion of the first user interface.

In some embodiments, the first user interface is a user interface for a voicemail application and wherein the textual content is a transcript of a voicemail (e.g., 610a and/or recorded phone message). In some embodiments, the first user interface is a user interface for a communication application and the textual content is a written communication (e.g., a text message, an email and/or email thread, a note, and/or other message). In some embodiments, the first user interface is for a media application and the textual content is an article, summary, and/or other written work.

In some embodiments, the indication that the one or more suggested actions related to the textual content have been identified includes a notification (e.g., 612 and/or an alert). In some embodiments, the notification is a banner displayed at the top of the first user interface, as shown in FIG. 6K.

In some embodiments, the indication that the one or more suggested actions related to the textual content have been identified has an appearance that changes over time (e.g., the indication is dynamic, such as 612, 612a, 612b, and/or 612c). In some embodiments, at a first time, the indication that one or more suggested actions related to the textual content have been identified has a first appearance (e.g., a first color and/or a first location for a visual characteristic) and, at a second time, the indication that one or more suggested actions related to the textual content have been identified has a second appearance (e.g., a second color and/or a second location for a visual characteristic) that is different from the first appearance.

In some embodiments, the indication that the one or more suggested actions related to the textual content have been identified includes underlining, highlighting, changing one or more colors, and/or animating a change to a first portion of the textual content (e.g., keywords and/or a portion of the textual content that is determined to be relevant to the one or more suggested actions, such as the text of 610a highlighted by 612a, 612b, and/or 612c).

In some embodiments, displaying the first user interface that includes the indication that one or more suggested actions related to the textual content have been identified includes displaying the indication proximate to (e.g., overlaid on, in line with, adjacent to, above, below, and/or to the side of, such as the highlighting of 612a, 612b, and/or 612c overlaid on the text of 610a) a respective portion of the textual content that is determined to be relevant (e.g., related) to a respective suggested action of the one or more suggested actions.

In some embodiments, the respective portion of the textual content is determined to be relevant to the respective suggested action based on an identified category of the respective portion of the textual content (e.g., date, time, location, person, entity, and/or event) and/or an identified type of the respective suggested action (e.g., adding an event to a calendar, displaying directions, and/or displaying weather information). For the example shown in FIG. 6A, the location of "Hyde Park Campground" is determined to be relevant for a suggested action of displaying directions. For the example shown in FIG. 8L, the time of "4:00ish" is determined to be relevant for a suggested action of adding an event to a calendar.

In some embodiments, the respective portion of the textual content is determined to be relevant to the respective suggested action based on semantic similarity (e.g., similarity of language and/or logic). For the example shown in FIG. 6A, the location "Hyde Park Campground" is determined to be relevant for a suggested action of displaying directions to "Hyde Memorial State Park" based on semantic similarity between Hyde Park Campground and Hyde Memorial State Park. As another example, for a suggested action of displaying stock information, a word, phrase, or entity name similar to the stock ticker symbol is identified as the respective portion of the textual content.

In some embodiments, the one or more suggested actions are identified for one or more user-selected categories of suggested actions (e.g., categories of suggested actions that have been designated by a user of the computer system, such as events, reminders, directions, and/or notes). In some embodiments, the computer system detects, via the one or more input devices, one or more inputs corresponding to user selection of one or more categories of actions for which to display suggested actions, as shown in FIG. 6O. In some embodiments, the computer system displays information for a suggested action that is within one of the selected categories and the computer system forgoes displaying information for a suggested action that is not within one of the selected categories.

In some embodiments, the one or more suggested actions are identified based on detection that a second portion of the textual content is a first category of text (e.g., "Hyde Park Campground" shown in FIG. 6A is identified as a location). In some embodiments, the second portion of the textual content is the same as the first portion of textual content. In some embodiments, the second portion of the textual content is different from the first portion of textual content.

In some embodiments, the first category of text includes people (e.g., contacts saved to an account associated with the computer system), entities (e.g., businesses, teams, and/or organizations), places (e.g., venues and/or landmarks), locations (e.g., addresses and/or coordinates), dates, times, numbers (e.g., phone numbers), activities (e.g., actions that may be taken, such as caping, hiking, and/or kayaking), and/or events (e.g., appointments, trips, sporting events, and/or concerts). For example, FIG. 6A illustrates identification of people (e.g., Rory), entities (e.g., Outdoor Recreation Co.), places and/or locations (e.g., Hyde Park Campgrounds), dates and/or times (e.g., next weekend), actions (e.g., pick up beef jerky), and/or activities (e.g., camping), which are used to identify suggested actions.

In some embodiments, the one or more suggested actions include adding an event to a calendar (e.g., 614a), adding an appointment to a calendar, setting a reminder (e.g., 614b), displaying directions (e.g., navigation directions and/or a map, such as 614c), making a note (e.g., 622c), updating a list (e.g., a shopping list, such as 622a), and/or viewing information (e.g., weather information and/or stock information, such as 626a).

In some embodiments, the one or more suggested actions are identified based on (e.g., using) one or more artificial intelligence models. In some embodiments, the one or more artificial intelligence models identify the one or more suggested actions based on the textual content, user-selected options (e.g., user-selected categories of suggested actions), and/or historical information (e.g., previous user actions, such as a history of performing a particular action and/or using a particular application).

In some embodiments, a first artificial intelligence model identifies a first set of one or more suggested actions and a second artificial intelligence model refines (or, in some embodiments, prioritizes and/or ranks) the first set of one or more suggested actions identified by the first artificial intelligence model. In some embodiments, the first artificial intelligence model uses global data (e.g., shared and/or publicly available data) and the second artificial intelligence model uses user-specific data (e.g., data specific to a user of the computer system).

In some embodiments, displaying the second user interface includes displaying information based on (e.g., obtained and/or inferred from) the textual content (e.g., 616a, 616b, and/or 616c). In some embodiments, the computer system prepopulates information in the second user interface based on information specified in the textual content (e.g., a date, time, location, title, and/or description for an event being added to a calendar).

In some embodiments, the information that is displayed based on the textual content includes one or more parameters (e.g., 616c) relating to the suggested action identified in the textual content (e.g., a start time for an appointment or a departure time for a trip that is obtained and/or inferred from the textual content).

In some embodiments, the information that is displayed based on the textual content includes a person (e.g., a contact saved to an account associated with the computer system, such as "RORY" in FIG. 6C), entity (e.g., a business, team, and/or organization, such as "OUTDOOR RECREATION CO." in FIG. 6J), place (e.g., a venue and/or landmark, such as "HYDE MEMORIAL STATE PARK" in FIG. 6C), location (e.g., an address and/or coordinates, such as "790 HYDE PARK RD" in FIG. 6C), date (e.g., "JUN 13, 2025" in FIG. 6C), time, number (e.g., phone number and/or confirmation number), activity (e.g., actions that may be taken, such as camping, hiking, and/or kayaking), and/or event (e.g., appointment, trip, sporting event, and/or concert).

In some embodiments, after performing the suggested action (and, in some embodiments, while continuing to display the first user interface), the computer system displays, via the one or more display generation components and in the first user interface, an indication (e.g., 812c) that the suggested action was performed. In some embodiments, the indication that one or more suggested actions related to the textual content have been identified changes (e.g., in appearance) after a suggested action has been performed.

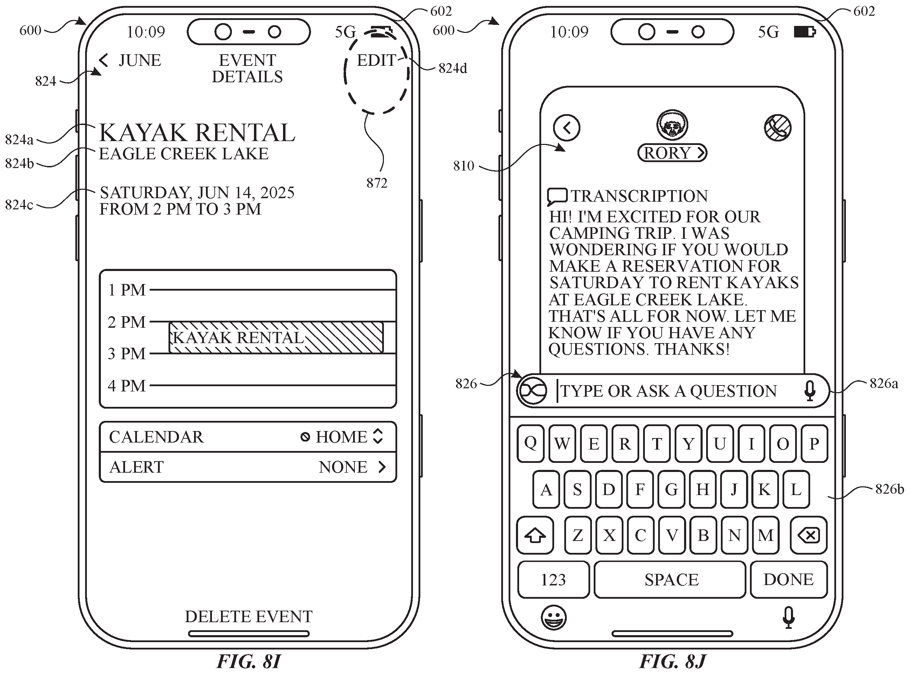

Note that details of the processes described above with respect to method 700 (e.g., FIG. 7) are also applicable in an analogous manner to the methods described below. For example, method 900 optionally includes one or more of the characteristics of the various methods described above with reference to method 700. For example, the settings interfaces shown in FIGS. 6N and 6O are used to configure settings that impact the identification and display of suggested actions shown in the example illustrated in FIGS. 8A-8L. As another example, the features of the user interfaces shown in FIGS. 8J and 8K for interacting with a digital assistant can be applied to the examples shown in FIGS. 6A-6O. For brevity, these details are not repeated below.

FIGS. 8A-8L illustrate exemplary user interfaces for performing suggested actions or modifying suggested actions that have been performed, in accordance with some embodiments. The user interfaces in these figures are used to illustrate the processes described below, including the processes in FIGS. 9A-9B.

FIG. 8A illustrates computer system 600, which is described in more detail above. In FIG. 8A, computer system 600 displays user interface 810 for a voicemail application, similar to user interface 610 shown in FIG. 6A. User interface 810 includes transcript 810a, contact 810b, and control panel 810c. User interface 810 includes indication 812, which indicates that suggested actions have been identified, as discussed in more detail above with respect to indications 612a-612c in FIG. 6A and indication 612 in FIG. 6K. In the example shown in FIG. 8A, suggested action 812a (e.g., "KAYAK RENTAL AT EAGLE CREEK") relates to renting kayaks based on the information contained in transcript 810a.

In response to input 850 on add button 812b, computer system 600 displays suggested actions menu 814, as shown in FIG. 8B. The order of suggested actions in suggested action menu 814 is based on a determined relevance to the user of the computer system, such as based on user-selected default applications and previous actions taken by the user, as described in more detail with respect to FIGS. 6A-6O. Suggested action menu 814 includes suggested action 814a ("ADD TO CALENDAR"), 814b ("CREATE REMINDER"), and 814c ("GET DIRECTIONS").

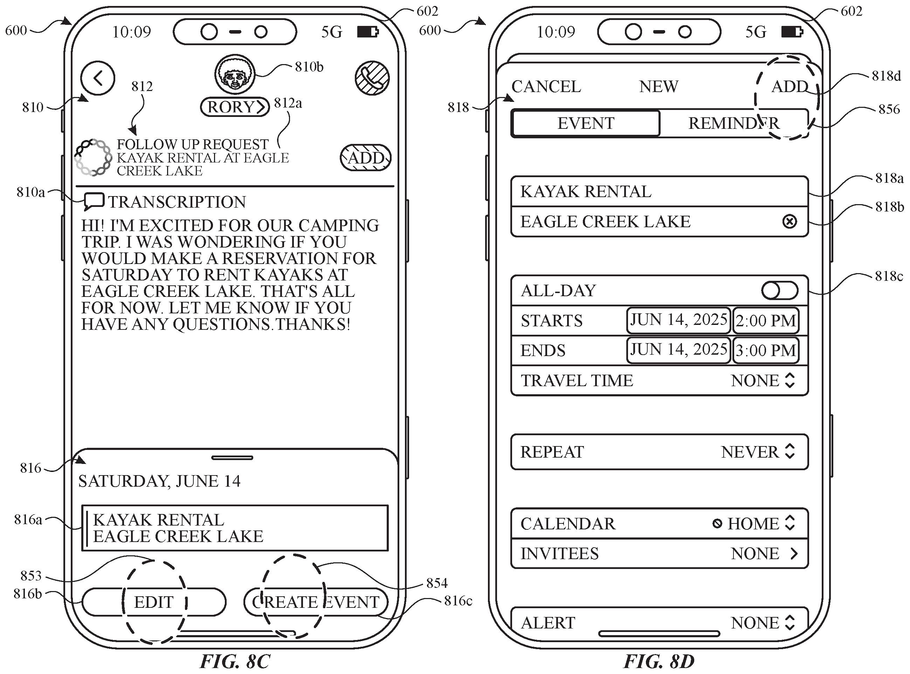

A user can select a suggested action in order to initiate a process for performing the action. For example, in response to input 852 on suggested action 814a, computer system 600 displays a user interface for adding a new event to the calendar. The user interface for performing an action, such as adding a new event, can take various forms. In some embodiments, in response to input 852 on suggested action 814a, computer system 600 displays new event interface 616, as shown in FIG. 6C and described above. In some embodiments, computer system 600 displays new event interface 816, as shown in FIG. 8C. New event interface 816 includes option 816b for editing the event before adding it to the calendar (e.g., via input 853) and option 816c for creating the new event directly (e.g., via input 854 and/or without editing the event before adding it to the calendar). In response to input 854 on option 816c, computer system 600 displays new event interface 818, as shown in FIG. 8D.

In some embodiments, in response to input 852 on suggested action 814a shown in FIG. 8B, computer system 600 displays new event interface 818, as shown in FIG. 8D, which replaces (and/or covers) user interface 810 (e.g., as compared with new event interface 616 shown in FIG. 6C and new event interface 816 shown in FIG. 8C, which are displayed concurrently with a portion of user interface 610 and user interface 810, respectively). In some embodiments, new event interface 818 is an interface for an application (e.g., a calendar application) that is different from the application for user interface 810 (e.g., a voicemail application). New event interface 818 includes prepopulated information based on the textual content of transcript 810a. For example, title 818a is populated with "KAYAK RENTAL," location 818b is populated with "EAGLE CREEK LAKE," and date 818c is populated with "JUN 14, 2025" based on the information shown in transcript 810a. In response to input 856 on add button 818d, computer system 600 saves the event to the calendar application.

After the event has been added to the calendar (e.g., after one of the suggested actions has been taken), computer system 600 displays an indication that a suggested action has been taken. As illustrated in FIG. 8E, user interface 810 includes edit button 812c (e.g., rather than add button 812b, as shown in FIG. 8A), indicating that an action has already been taken and that a user can modify the previously taken action. In response to input 858 on edit button 812c shown in FIG. 8E, computer system 600 displays modifications menu 820, as shown in FIG. 8F. Since the user has previously added an event to the calendar, modifications menu 820 includes suggested options for modifying the event, including suggested modification 820a (e.g., "EDIT EVENT"), suggested modification 820b ("SHOW IN CALENDAR"), and suggested modification 820c ("DELETE EVENT").

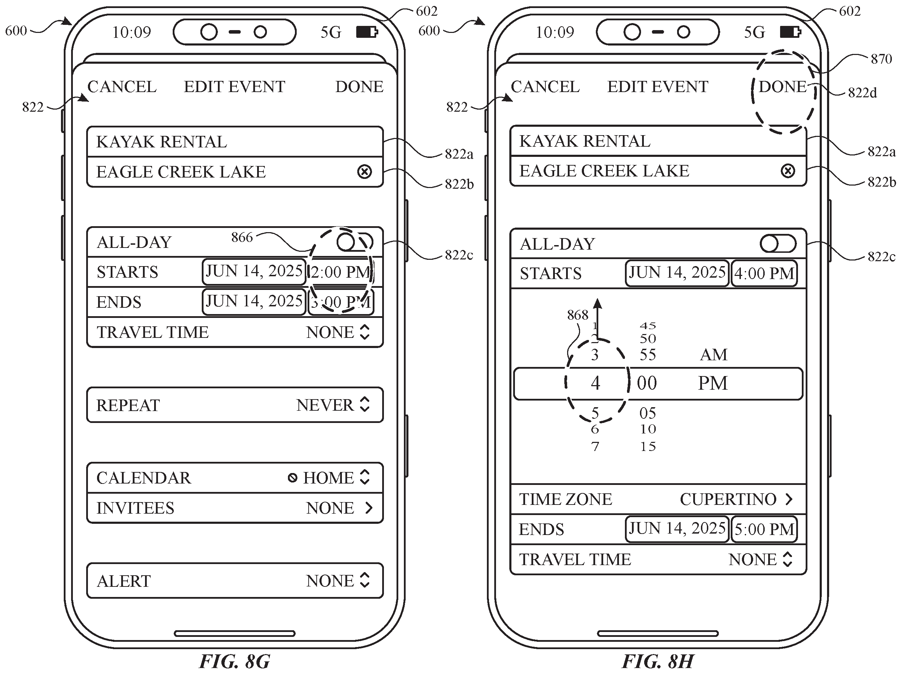

In response to input 860 on suggested modification 820a ("EDIT EVENT"), computer system 600 displays edit event interface 822, as shown in FIG. 8G. Edit event interface 822 displays previously saved details regarding the event, including title 822a, location 822b, and date 822c. Edit event interface 822 enables a user to make and save changes to the details for the event. For example, in response to input 868, as shown in FIG. 8H, computer system changes the start time for the event (e.g., from 2:00 PM to 4:00 PM) for date 822c. In response to input 870 on done button 822d, computer system 600 updates the event in the calendar with the modified information.

A user can perform other suggested actions for modifying the previously performed suggested action. For example, in response to input 862 on suggested modification 820b ("SHOW IN CALENDAR"), computer system 600 displays event details interface 824, as shown in FIG. 8I. Event details interface 824 includes event details for the event that was previously added to the calendar and provides additional options and controls, such as editing the event. For example, in response to input 872 on edit option 824d, computer system 600 displays edit event interface 822, as shown in FIG. 8G. In some embodiments, computer system 600 performs the modification directly in response to selection of an option. For example, in response to input 864 on suggested modification option 820c ("DELETE EVENT"), computer system 600 removes the event from the calendar (and, in some embodiments, displays user interface 810 as shown in FIG. 8A).

In some embodiments, one of the suggested actions includes an option to interact with a digital assistant. For example, suggested actions menu 814 and/or suggested modifications menu 820 could include an option "ASK ASSISTANT." In some embodiments, in response to selection of an option to interact with a digital assistant, computer system 600 displays an interface such as interface 826 shown in FIG. 8J. In some embodiments, computer system 600 displays interface 826 in response to a verbal command (e.g., "Hey assistant") while displaying user interface 810, suggested actions menu 814, and/or suggested modifications menu 820 (e.g., whether or not a respective menu includes an option "ASK ASSISTANT"). Interface 826 provides an open-ended user interface that enables a user to make a variety of requests. As an example, a user could say and/or type (e.g., via keyboard 826b) "CREATE A CALENDAR EVENT FOR THIS" as an input in field 826a. In response to the input to create a calendar event in field 826a, computer system 600 creates the event and displays interface 828, as shown in FIG. 8K, which indicates to the user that the event was added to the calendar.

In some embodiments, a digital assistant can be used to perform one of the actions shown in suggested actions menu 814 and/or suggested modifications menu 820. For example, in response to input 852 on suggested action 814a ("ADD TO CALENDAR"), computer system creates the event and displays interface 828, as shown in FIG. 8L.

In some embodiments, computer system 600 displays a different user interface that includes textual content, such as a communication user interface that includes a text message conversation and/or an email thread or a media user interface that includes one or more articles, posts, and/or written summaries. For example, as shown in FIG. 8L, computer system 600 displays text messaging interface 830. Text messaging interface 830 includes contact 830a ("RORY"), sent message 830b, and received message 830c. As illustrated in FIG. 8L, computer system 600 identifies suggested actions and provides indication 832 proximate to relevant text in received message 830c, as discussed in more detail above with respect to FIG. 6A. In response to an input on indication 832, computer system 600 displays suggested actions menu 834, similar to those described above, with suggested action 834a ("ADD TO CALENDAR"), suggested action 834b ("CREATE REMINDER"), and suggested action 834c ("GET DIRECTIONS"). A user can make selections and perform suggested actions from the interfaces shown in FIG. 8L and other user interfaces that include textual content in a similar manner to as described above.

FIGS. 9A-9B are a flow diagram illustrating a method for displaying a user interface for performing a suggested action or modifying a suggested action that has been performed using a computer system in accordance with some embodiments. Method 900 is performed at a computer system (e.g., 100, 300, 500, 600, a smart phone, a smart watch, a head-mounted device, a tablet computer, a personal computer, and/or a digital media player) that is in communication with one or more display generation components (e.g., 602, a display controller, a touch-sensitive display system, a display (e.g., integrated and/or connected), a 3D display, a transparent display, a projector, a heads-up display, and/or a head-mounted display) and one or more input devices (e.g., 602, a touch-sensitive surface, a button, a mouse, a keyboard, a joystick, a camera sensor, a microphone, and/or a motion sensor). Some operations in method 900 are, optionally, combined, the orders of some operations are, optionally, changed, and some operations are, optionally, omitted.

As described below, method 900 provides an intuitive way for performing suggested actions or modifying suggested actions that have been performed. The method reduces the cognitive burden on a user for performing or modifying suggested actions, thereby creating a more efficient human-machine interface. For battery-operated computing devices, enabling a user to perform or modify suggested actions faster and more efficiently conserves power and increases the time between battery charges.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. Providing improved feedback (such as by displaying an indication that suggested actions related to the textual content have been identified and displaying a set of options for suggested actions in an order based on determined relevance to a user of the computer system) enhances the operability of the device by reducing accidental and mistaken inputs, reducing energy usage by the device. Reducing the number of inputs needed to perform an operation (such as by displaying a graphical user interface object corresponding to performing one or more suggested actions, displaying one or more options for performing suggested actions, displaying a graphical user interface object corresponding to modifying a suggested action that has been performed, displaying one or more options for modifying a suggested action that has been performed, and displaying a user interface for interacting with a digital assistant) enhances the operability of the device by reducing the number of inputs and time required to perform a particular operation, reducing energy usage by the device.

Providing additional control options (such as a graphical user interface object corresponding to performing one or more of the suggested actions, a graphical user interface object corresponding to modifying the suggested action that has been performed, a set of one or more options for performing a suggested action, and a set of one or more options for modifying the suggested action that has been performed) without cluttering the UI with additional displayed controls enhances the operability of the device by reducing unnecessary inputs and/or steps to navigate through different user interfaces or sets of controls, reducing energy usage by the device. Performing an operation when a set of conditions has been met without requiring further user input (such as by displaying a user interface for performing a first suggested action in response to detecting selection of a first option for performing a first suggested action, performing the first option for modifying the suggested action that has been performed in response to selection of a first option for modifying the suggested action that has been performed, and displaying a user interface for modifying the suggested action that has been performed in response to detecting selectin of a second option for modifying the suggested action that has been performed) enhances the operability of the device by reducing unnecessary inputs and/or steps to navigate through different user interfaces or sets of controls, reducing energy usage by the device.

The computer system displays (902), via the one or more display generation components, a user interface (e.g., 810, an application user interface, such as for a voicemail application, a messaging application, and/or a communication application), that includes textual content (904) (e.g., 810a, a communication, message, notification, article, summary, and/or a transcript thereof) and an indication (906) (e.g., 812 and/or a visual indication) that one or more suggested actions related to the textual content (e.g., actions that a user of the computer system is likely to take based on the textual content and/or actions that are likely to be helpful for the user based on the textual content, such as creating a reminder associated with the textual content) have been identified (e.g., by the computer system, a digital assistant, an artificial intelligence model, and/or a combination thereof).

While displaying the user interface (908), in accordance with a determination that the one or more suggested actions have not been performed (e.g., none of the suggested actions have been performed), the computer system displays (910), via the one or more display generation components, a graphical user interface object (e.g., 812b, a button, and/or selectable option) corresponding to performing one or more of the one or more suggested actions. While displaying the user interface (908), in accordance with a determination that a suggested action of the one or more suggested actions has been performed, the computer system displays (912), via the one or more display generation components, a graphical user interface object (e.g., 812c, a button, and/or selectable option) corresponding to modifying the suggested action that has been performed (e.g., viewing and/or changing options associated with the suggested action that has been performed).

The computer system detects (914), via the one or more input devices, selection of a respective graphical user interface object (e.g., the graphical user interface object corresponding to initiating performance of one or more suggested actions and/or the graphical user interface object corresponding to modifying the suggested action).

In response to detecting selection of the respective graphical user interface object (e.g., 812b) (916), in accordance with a determination that the respective graphical user interface object is the graphical user interface object corresponding to performing one or more of the one or more suggested actions, the computer system displays (918), via the one or more display generation components, a set of one or more options (e.g., 814 and/or a menu of options) for performing a respective suggested action of the one or more suggested actions.

In response to detecting selection of the respective graphical user interface object (e.g., 812c) (916), in accordance with a determination that the respective graphical user interface object is the graphical user interface object corresponding to modifying the suggested action that has been performed, the computer system displays (920), via the one or more display generation components, a set of one or more options (e.g., 820 and/or a menu of options) for modifying the suggested action that has been performed.

In some embodiments, in response to detecting selection of the respective graphical user interface object, the computer system displays, via the one or more display generation components, a respective set of options in a menu, wherein the order of options in the menu is based on a determined relevance of each option to a user of the computer system (e.g., the first and/or top option, such as 814a, is determined to be more relevant to the user than the second and/or subsequent option, such as 814b and/or 814c).

In some embodiments, the determined relevance is based on historical activity (e.g., previous actions taken and/or previous applications used by a user of the computer system). For example, if a user adds events to a calendar more often than the user adds reminders, a suggested action of adding an event to a calendar will be determined to be more relevant than a suggested action of adding a reminder.

In some embodiments, the determined relevance is based on one or more user-configured settings (e.g., selection of a default application, such as via settings interfaces 632 and/or 634). For example, if a user selected a first application as a default application for navigation, a suggested action of displaying directions in the first application will be determined to be more relevant than a suggested action of displaying directions in a second application. In some embodiments, the suggested actions include performing an action associated with a third party application. For example, if a user selected a third party application as the default application for navigation, the suggested action of displaying directions in the third party application will be determined to be more relevant than a suggested action of displaying directions in another system and/or first party application.

In some embodiments, the computer system detects, via the one or more input devices, selection of a first option (e.g., 814a) for performing a first suggested action (e.g., "ADD TO CALENDAR") of the one or more suggested actions. In some embodiments, in response to detecting selection of the first option for performing the first suggested action, the computer system displays, via the one or more display generation components, a second user interface (e.g., 614, 816, and/or 818) for performing the first suggested action.

In some embodiments, the second user interface is displayed concurrently with (e.g., overlaid on and/or overlapping a portion of) at least a portion of the first user interface (e.g., as illustrated by 614 and/or 816).

In some embodiments, the first user interface is a user interface for a first application and the second user interface is a user interface for a second application that is different from the first application (e.g., 818, which is for a different application than 810). In some embodiments, the first user interface is replaced with the second user interface (e.g., the first user interface and the second user interface are not displayed concurrently).

In some embodiments, displaying the second user interface for performing the suggested action includes displaying a user interface (e.g., 826 and/or 828) for interacting with a digital assistant (e.g., a set of one or more computer programs and/or artificial intelligence models that simulate conversation and facilitate performing requested actions).

In some embodiments, while displaying the second user interface (e.g., 818), the computer system detects, via the one or more input devices, a first set of one or more inputs (e.g., user selections and/or actions, such as 856) corresponding to a request to perform the first suggested action. In some embodiments, in response to detecting the first set of one or more inputs, the computer system performs the first suggested action.

In some embodiments, the computer system detects, via the one or more input devices, selection of a first option (e.g., 820c) for modifying (e.g., changing and/or editing aspects of) the suggested action that has been performed. In some embodiments, in response to detecting the selection of the first option for modifying the suggested action that has been performed, the computer system performs the first option for modifying the suggested action that has been performed (e.g., deleting a calendar event). In some embodiments, the computer system performs the modification in response to detecting selection of the first option without requiring additional user inputs.

In some embodiments, the computer system detects, via the one or more input devices, selection of a second option (e.g., 820a) for modifying (e.g., changing and/or editing aspects of) the suggested action that has been performed. In some embodiments, the first option is different from the second option. In some embodiments, the first option is the same as the second option. In some embodiments, in response to detecting selection of the second option for modifying the suggested action that has been performed, the computer system displays, via the one or more display generation components, a third user interface (e.g., 822) for modifying the suggested action that has been performed. In some embodiments, the computer system displays the third user interface and one or more additional user inputs are required to perform the modification.

In some embodiments, the first user interface is a user interface for a third application (e.g., a voicemail application, as shown in 810) and the second user interface is a user interface for a fourth application (e.g., a calendar application, as shown in 822) that is different from the third application. In some embodiments, the third application is the same as the first application. In some embodiments, the third application is different from the first application. In some embodiments, the fourth application is the same as the second application. In some embodiments, the fourth application is different from the second application. In some embodiments, the third user interface is replaced with the fourth user interface (e.g., the third user interface and the fourth user interface are not displayed concurrently).

In some embodiments, while displaying the third user interface (e.g., 822), the computer system detects, via the one or more input devices, a second set of one or more inputs (e.g., user selections and/or actions, such as 868) corresponding to modifying the suggested action that has been performed. In some embodiments, in response to detecting the second set of one or more inputs, the computer system modifies the suggested action that has been performed. In some embodiments, the second set of one or more inputs corresponds to changing details regarding the suggested action that has been performed, such as changing a time for an event that has been saved in the calendar.

In some embodiments, the first user interface is a user interface for a voicemail application (e.g., 810) and wherein the textual content is a transcript (e.g., 810a) of a voicemail (e.g., recorded phone message).

In some embodiments, the first user interface is a user interface for a communication application (e.g., 830) and the textual content is a written communication (e.g., 830c, a text message, an email and/or email thread, a note, and/or other message). In some embodiments, the first user interface is for a media application and the textual content is an article, summary, and/or other written work.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

Some embodiments described herein can include use of artificial intelligence and/or machine learning systems (sometimes referred to herein as the AI/ML systems). The use can include collecting, processing, labeling, organizing, analyzing, recommending and/or generating data. Entities that collect, share, and/or otherwise utilize user data should provide transparency and/or obtain user consent when collecting such data. The present disclosure recognizes that the use of the data in the AI/ML systems can be used to benefit users. For example, the data can be used to train models that can be deployed to improve performance, accuracy, and/or functionality of applications and/or services. Accordingly, the use of the data enables the AI/ML systems to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the AI/ML systems are also contemplated by the present disclosure.

The present disclosure contemplates that, in some embodiments, data used by AI/ML systems includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with AI/ML systems, should attempt to comply with well-established privacy policies and/or privacy practices.

For example, such entities may implement and consistently follow policies and practices recognized as meeting or exceeding industry standards and regulatory requirements for developing and/or training AI/ML systems. In doing so, attempts should be made to ensure all intellectual property rights and privacy considerations are maintained. Training should include practices safeguarding training data, such as personal information, through sufficient protections against misuse or exploitation. Such policies and practices should cover all stages of the AI/ML systems development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, AI/ML systems may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for AI/ML systems may be kept strictly separated from platforms where the AI/ML systems are deployed and/or used to interact with users and/or process data. In such embodiments, data used for offline training of the AI/ML systems may be maintained in secured datastores with restricted access and/or not be retained beyond the duration necessary for training purposes. In some embodiments, the AI/ML systems may utilize a local memory cache to store data temporarily during a user session. The local memory cache may be used to improve performance of the AI/ML systems. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the AI/ML systems. The AI/ML systems should be monitored for changes in underlying data distribution such as concept drift or data skew that can degrade performance of the AI/ML systems over time.

In some embodiments, the AI/ML systems are trained using a combination of offline and online training. Offline training can use curated datasets to establish baseline model performance, while online training can allow the AI/ML systems to continually adapt and/or improve. The present disclosure recognizes the importance of maintaining strict data governance practices throughout this process to ensure user privacy is protected.

In some embodiments, the AI/ML systems may be designed with safeguards to maintain adherence to originally intended purposes, even as the AI/ML systems adapt based on new data. Any significant changes in data collection and/or applications of an AI/ML system use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the AI/ML systems and/or for use as input during the inference stage of such systems. In yet another example, the present technology should be configured to allow users to be able to select to limit the length of time data is maintained or entirely prohibit the use of their data for use by the AI/ML systems. In addition to providing "opt in" and "opt out" options, the present disclosure contemplates providing notifications relating to the access or use of personal information. For instance, a user can be notified when their data is being input into the AI/ML systems for training or inference purposes, and/or reminded when the AI/ML systems generate outputs or make decisions based on their data.

The present disclosure recognizes AI/ML systems should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to third-party products and/or services in the outputs should not be construed as endorsements or affiliations by the entities providing the AI/ML systems. Generated content can be filtered for potentially inappropriate or dangerous material prior to being presented to users, while human oversight and/or ability to override or correct erroneous or undesirable outputs can be maintained as a failsafe.

The present disclosure further contemplates that users of the AI/ML systems should refrain from using the services in any manner that infringes upon, misappropriates, or violates the rights of any party. Furthermore, the AI/ML systems should not be used for any unlawful or illegal activity, nor to develop any application or use case that would commit or facilitate the commission of a crime, or other tortious, unlawful, or illegal act. The AI/ML systems should not violate, misappropriate, or infringe any copyrights, trademarks, rights of privacy and publicity, trade secrets, patents, or other proprietary or legal rights of any party, and appropriately attribute content as required. Further, the AI/ML systems should not interfere with any security, digital signing, digital rights management, content protection, verification, or authentication mechanisms. The AI/ML systems should not misrepresent machine-generated outputs as being human-generated.

As described above, one aspect of the present technology is the gathering and use of data available from various sources to improve relevance of suggested actions. The present disclosure contemplates that in some instances, this gathered data may include personal information data that uniquely identifies or can be used to contact or locate a specific person. Such personal information data can include demographic data, location-based data, telephone numbers, email addresses, social network IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to identify, refine, and/or prioritize suggested actions that are of greater interest to the user. Accordingly, use of such personal information data enables more relevant suggested actions. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of using applications, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, suggested actions can be identified by inferring preferences based on non-personal information data or a bare minimum amount of personal information, such as the content being requested by the device associated with a user, other non-personal information available to the content delivery services, or publicly available information.

Exemplary methods, computer systems, computer program products, and non-transitory computer-readable storage media are set out in the following items.
1. A method comprising:
   at a computer system that is in communication with one or more display generation components and one or more input devices:
   displaying, via the one or more display generation components, a first user interface, that includes:
      textual content; and
      an indication that one or more suggested actions related to the textual content have been identified;
   detecting, via the one or more input devices, a first set of one or more inputs corresponding to a request to initiate a suggested action of the one or more suggested actions;
   in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface;
   while concurrently displaying the second user interface and at least the portion of the first user interface, detecting, via the one or more input devices, a second set of one or more inputs corresponding to a request to perform the suggested action; and
   in response to detecting the second set of one or more inputs, performing the suggested action while continuing to display at least the portion of the first user interface.
2. The method of item 1, wherein the first user interface is a user interface for a voicemail application and wherein the textual content is a transcript of a voicemail.
3. The method of any one of items 1-2, wherein the indication that the one or more suggested actions related to the textual content have been identified includes a notification.
4. The method of any one of items 1-3, wherein the indication that the one or more suggested actions related to the textual content have been identified has an appearance that changes over time.
5. The method of item 4, wherein the indication that the one or more suggested actions related to the textual content have been identified includes underlining, highlighting, changing one or more colors, and/or animating a change to a first portion of the textual content.
6. The method of any one of items 1-5, wherein displaying the first user interface that includes the indication that one or more suggested actions related to the textual content have been identified includes displaying the indication proximate to a respective portion of the textual content that is determined to be relevant to a respective suggested action of the one or more suggested actions.
7. The method of item 6, wherein the respective portion of the textual content is determined to be relevant to the respective suggested action based on an identified category of the respective portion of the textual content and/or an identified type of the respective suggested action.
8. The method of any one of items 6-7, wherein the respective portion of the textual content is determined to be relevant to the respective suggested action based on semantic similarity.
9. The method of any one of items 1-8, wherein the one or more suggested actions are identified for one or more user-selected categories of suggested actions.
10. The method of any one of item 1-9, wherein the one or more suggested actions are identified based on detection that a second portion of the textual content is a first category of text.
11. The method of item 10, wherein the first category of text includes people, entities, places, locations, dates, times, numbers, activities, and/or events.
12. The method of any one of items 1-11, wherein the one or more suggested actions include adding an event to a calendar, adding an appointment to a calendar, setting a reminder, displaying directions, making a note, updating a list, and/or viewing information.
13. The method of any one of items 1-12, wherein the one or more suggested actions are identified based on one or more artificial intelligence models.
14. The method of item 13, wherein a first artificial intelligence model identifies a first set of one or more suggested actions and a second artificial intelligence model refines the first set of one or more suggested actions identified by the first artificial intelligence model.
15. The method of any one of items 1-14, wherein displaying the second user interface includes displaying information based on the textual content.
16. The method of item 15, wherein the information that is displayed based on the textual content includes one or more parameters relating to the suggested action identified in the textual content.
17. The method of any one of items 15-16, wherein the information that is displayed based on the textual content includes a person, entity, place, location, date, time, number, activity, and/or event.
18. The method of any one of items 1-17, further comprising:
   after performing the suggested action, displaying, via the one or more display generation components and in the first user interface, an indication that the suggested action was performed.
19. A non-transitory computer-readable storage medium storing one or more programs configured to be executed by one or more processors of a computer system that is in communication with one or more display generation components and one or more input devices, the one or more programs including instructions for performing the method of any of items 1-18.
20. A computer system that is configured to communicate with one or more display generation components and one or more input devices, the computer system comprising:
   one or more processors; and
   memory storing one or more programs configured to be executed by the one or more processors, the one or more programs including instructions for performing the method of any of items 1-18.
21. A computer system that is configured to communicate with one or more display generation components and one or more input devices, comprising:
   means for performing the method of any of items 1-18.
22. A computer program product, comprising one or more programs configured to be executed by one or more processors of a computer system that is in communication with one or more display generation components and one or more input devices, the one or more programs including instructions for performing the method of any of items 1-18.
23. A non-transitory computer-readable storage medium storing one or more programs configured to be executed by one or more processors of a computer system that is in communication with one or more display generation components and one or more input devices, the one or more programs including instructions for:
   displaying, via the one or more display generation components, a first user interface, that includes:
      textual content; and
      an indication that one or more suggested actions related to the textual content have been identified;
   detecting, via the one or more input devices, a first set of one or more inputs corresponding to a request to initiate a suggested action of the one or more suggested actions;
   in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface;
   while concurrently displaying the second user interface and at least the portion of the first user interface, detecting, via the one or more input devices, a second set of one or more inputs corresponding to a request to perform the suggested action; and
   in response to detecting the second set of one or more inputs, performing the suggested action while continuing to display at least the portion of the first user interface.
24. A computer system configured to communicate with one or more display generation components and one or more input devices, comprising:
   one or more processors; and
   memory storing one or more programs configured to be executed by the one or more processors, the one or more programs including instructions for:
      displaying, via the one or more display generation components, a first user interface, that includes:
         textual content; and
         an indication that one or more suggested actions related to the textual content have been identified;
      detecting, via the one or more input devices, a first set of one or more inputs corresponding to a request to initiate a suggested action of the one or more suggested actions;
      in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface;
      while concurrently displaying the second user interface and at least the portion of the first user interface, detecting, via the one or more input devices, a second set of one or more inputs corresponding to a request to perform the suggested action; and
   in response to detecting the second set of one or more inputs, performing the suggested action while continuing to display at least the portion of the first user interface.
25. A computer system configured to communicate with one or more display generation components and one or more input devices, comprising:
   means for displaying, via the one or more display generation components, a first user interface, that includes:
      textual content; and
      an indication that one or more suggested actions related to the textual content have been identified;
   means for detecting, via the one or more input devices, a first set of one or more inputs corresponding to a request to initiate a suggested action of the one or more suggested actions;
   means for, in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface;
   means for, while concurrently displaying the second user interface and at least the portion of the first user interface, detecting, via the one or more input devices, a second set of one or more inputs corresponding to a request to perform the suggested action; and
   means for, in response to detecting the second set of one or more inputs, performing the suggested action while continuing to display at least the portion of the first user interface.
26. A computer program product, comprising one or more programs configured to be executed by one or more processors of a computer system that is in communication with one or more display generation components and one or more input devices, the one or more programs including instructions for:
   displaying, via the one or more display generation components, a first user interface, that includes:
      textual content; and
      an indication that one or more suggested actions related to the textual content have been identified;
   detecting, via the one or more input devices, a first set of one or more inputs corresponding to a request to initiate a suggested action of the one or more suggested actions;
   in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface;
   while concurrently displaying the second user interface and at least the portion of the first user interface, detecting, via the one or more input devices, a second set of one or more inputs corresponding to a request to perform the suggested action; and
   in response to detecting the second set of one or more inputs, performing the suggested action while continuing to display at least the portion of the first user interface.
27. A method comprising:
   at a computer system that is in communication with one or more display generation components and one or more input devices:
   displaying, via the one or more display generation components, a first user interface, that includes:
      textual content; and
      an indication that one or more suggested actions related to the textual content have been identified;
   while displaying the first user interface:
      in accordance with a determination that the one or more suggested actions have not been performed, displaying, via the one or more display generation components, a graphical user interface object corresponding to performing one or more of the one or more suggested actions;
      in accordance with a determination that a suggested action of the one or more suggested actions has been performed, displaying, via the one or more display generation components, a graphical user interface object corresponding to modifying the suggested action that has been performed;
   detecting, via the one or more input devices, selection of a respective graphical user interface object;
   in response to detecting selection of the respective graphical user interface object:
      in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and
      in accordance with a determination that the respective graphical user interface object is the graphical user interface object corresponding to modifying the suggested action that has been performed, displaying, via the one or more display generation components, a set of one or more options for modifying the suggested action that has been performed.
28. The method of item 27, further comprising:
   in response to detecting selection of the respective graphical user interface object, displaying, via the one or more display generation components, a respective set of options in a menu, wherein an order of options in the menu is based on a determined relevance of each option to a user of the computer system.
29. The method of item 28, wherein the determined relevance is based on historical activity.
30. The method of any one of items 28-29, wherein the determined relevance is based on one or more user-configured settings.
31. The method of any one of items 27-30, further comprising:
   detecting, via the one or more input devices, selection of a first option for performing a first suggested action of the one or more suggested actions; and
   in response to detecting selection of the first option for performing the first suggested action, displaying, via the one or more display generation components, a second user interface for performing the first suggested action.
32. The method of item 31, wherein the second user interface is displayed concurrently with at least a portion of the first user interface.
33. The method of any one of items 31-32, wherein the first user interface is a user interface for a first application and the second user interface is a user interface for a second application that is different from the first application.
34. The method of any one of items 31-33, wherein displaying the second user interface for performing the suggested action includes displaying a user interface for interacting with a digital assistant.
35. The method of any one of items 31-34, further comprising:
   while displaying the second user interface, detecting, via the one or more input devices, a first set of one or more inputs corresponding to a request to perform the first suggested action; and
   in response to detecting the first set of one or more inputs, performing the first suggested action.
36. The method of any one of items 27-35, further comprising:
   detecting, via the one or more input devices, selection of a first option for modifying the suggested action that has been performed; and
   in response to detecting the selection of the first option for modifying the suggested action that has been performed, performing the first option for modifying the suggested action that has been performed.
37. The method of any one of items 27-36, further comprising:
   detecting, via the one or more input devices, selection of a second option for modifying the suggested action that has been performed; and
   in response to detecting selection of the second option for modifying the suggested action that has been performed, displaying, via the one or more display generation components, a third user interface for modifying the suggested action that has been performed.
38. The method of item 37, wherein the first user interface is a user interface for a third application and the third user interface is a user interface for a fourth application that is different from the third application.
39. The method of any one of items 37-38, further comprising:
   while displaying the third user interface, detecting, via the one or more input devices, a second set of one or more inputs corresponding to modifying the suggested action that has been performed; and
   in response to detecting the second set of one or more inputs, modifying the suggested action that has been performed.
40. The method of any one of items 27-39, wherein the first user interface is a user interface for a voicemail application and wherein the textual content is a transcript of a voicemail.
41. The method of any one of items 27-40, wherein the first user interface is a user interface for a communication application and the textual content is a written communication.
42. A non-transitory computer-readable storage medium storing one or more programs configured to be executed by one or more processors of a computer system that is in communication with one or more display generation components and one or more input devices, the one or more programs including instructions for performing the method of any of items 27-41.
43. A computer system that is configured to communicate with one or more display generation components and one or more input devices, the computer system comprising:
   one or more processors; and
   memory storing one or more programs configured to be executed by the one or more processors, the one or more programs including instructions for performing the method of any of items 27-41.
44. A computer system that is configured to communicate with one or more display generation components and one or more input devices, comprising:
   means for performing the method of any of items 27-41.
45. A computer program product, comprising one or more programs configured to be executed by one or more processors of a computer system that is in communication with one or more display generation components and one or more input devices, the one or more programs including instructions for performing the method of any of items 27-41.
46. A non-transitory computer-readable storage medium storing one or more programs configured to be executed by one or more processors of a computer system that is in communication with one or more display generation components and one or more input devices, the one or more programs including instructions for:
   displaying, via the one or more display generation components, a first user interface, that includes:
      textual content; and
      an indication that one or more suggested actions related to the textual content have been identified;
   while displaying the first user interface:
      in accordance with a determination that the one or more suggested actions have not been performed, displaying, via the one or more display generation components, a graphical user interface object corresponding to performing one or more of the one or more suggested actions;
      in accordance with a determination that a suggested action of the one or more suggested actions has been performed, displaying, via the one or more display generation components, a graphical user interface object corresponding to modifying the suggested action that has been performed;
   detecting, via the one or more input devices, selection of a respective graphical user interface object;
   in response to detecting selection of the respective graphical user interface object:
      in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and
      in accordance with a determination that the respective graphical user interface object is the graphical user interface object corresponding to modifying the suggested action that has been performed, displaying, via the one or more display generation components, a set of one or more options for modifying the suggested action that has been performed.
47. A computer system configured to communicate with one or more display generation components and one or more input devices, comprising:
   one or more processors; and
   memory storing one or more programs configured to be executed by the one or more processors, the one or more programs including instructions for:
      displaying, via the one or more display generation components, a first user interface, that includes:
         textual content; and
         an indication that one or more suggested actions related to the textual content have been identified;
      while displaying the first user interface:
         in accordance with a determination that the one or more suggested actions have not been performed, displaying, via the one or more display generation components, a graphical user interface object corresponding to performing one or more of the one or more suggested actions;
         in accordance with a determination that a suggested action of the one or more suggested actions has been performed, displaying, via the one or more display generation components, a graphical user interface object corresponding to modifying the suggested action that has been performed;
      detecting, via the one or more input devices, selection of a respective graphical user interface object;
      in response to detecting selection of the respective graphical user interface object:
         in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and
         in accordance with a determination that the respective graphical user interface object is the graphical user interface object corresponding to modifying the suggested action that has been performed, displaying, via the one or more display generation components, a set of one or more options for modifying the suggested action that has been performed.
48. A computer system configured to communicate with one or more display generation components and one or more input devices, comprising:
   means for displaying, via the one or more display generation components, a first user interface, that includes:
      textual content; and
      an indication that one or more suggested actions related to the textual content have been identified;
   means for, while displaying the first user interface:
      in accordance with a determination that the one or more suggested actions have not been performed, displaying, via the one or more display generation components, a graphical user interface object corresponding to performing one or more of the one or more suggested actions;
      in accordance with a determination that a suggested action of the one or more suggested actions has been performed, displaying, via the one or more display generation components, a graphical user interface object corresponding to modifying the suggested action that has been performed;
   means for detecting, via the one or more input devices, selection of a respective graphical user interface object;
   means for, in response to detecting selection of the respective graphical user interface object:
      in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and
      in accordance with a determination that the respective graphical user interface object is the graphical user interface object corresponding to modifying the suggested action that has been performed, displaying, via the one or more display generation components, a set of one or more options for modifying the suggested action that has been performed.
49. A computer program product, comprising one or more programs configured to be executed by one or more processors of a computer system that is in communication with one or more display generation components and one or more input devices, the one or more programs including instructions for:
   displaying, via the one or more display generation components, a first user interface, that includes:
      textual content; and
      an indication that one or more suggested actions related to the textual content have been identified;
   while displaying the first user interface:
      in accordance with a determination that the one or more suggested actions have not been performed, displaying, via the one or more display generation components, a graphical user interface object corresponding to performing one or more of the one or more suggested actions;
      in accordance with a determination that a suggested action of the one or more suggested actions has been performed, displaying, via the one or more display generation components, a graphical user interface object corresponding to modifying the suggested action that has been performed;
   detecting, via the one or more input devices, selection of a respective graphical user interface object;
   in response to detecting selection of the respective graphical user interface object:
      in accordance with a determination that the respective graphical user interface object is the graphical user interface object corresponding to performing one or more of the one or more suggested actions, displaying, via the one or more display generation components, a set of one or more options for performing a respective suggested action of the one or more suggested actions; and
      in accordance with a determination that the respective graphical user interface object is the graphical user interface object corresponding to modifying the suggested action that has been performed, displaying, via the one or more display generation components, a set of one or more options for modifying the suggested action that has been performed.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method comprising:
at a computer system that is in communication with one or more display generation components and one or more input devices:
displaying, via the one or more display generation components, a first user interface, that includes:
textual content; and
an indication that one or more suggested actions related to the textual content have been identified;
detecting, via the one or more input devices, a first set of one or more inputs corresponding to a request to initiate a suggested action of the one or more suggested actions;
in response to detecting the first set of one or more inputs corresponding to the request to initiate the suggested action, displaying, via the one or more display generation components, a second user interface corresponding to the suggested action, wherein the second user interface is displayed concurrently with at least a portion of the first user interface;
while concurrently displaying the second user interface and at least the portion of the first user interface, detecting, via the one or more input devices, a second set of one or more inputs corresponding to a request to perform the suggested action; and
in response to detecting the second set of one or more inputs, performing the suggested action while continuing to display at least the portion of the first user interface.

2. The method of claim 1, wherein the first user interface is a user interface for a voicemail application and wherein the textual content is a transcript of a voicemail.

3. The method of any one of claims 1-2, wherein the indication that the one or more suggested actions related to the textual content have been identified includes a notification.

4. The method of any one of claims 1-3, wherein the indication that the one or more suggested actions related to the textual content have been identified has an appearance that changes over time.

5. The method of any one of claims 1-4, wherein displaying the first user interface that includes the indication that one or more suggested actions related to the textual content have been identified includes displaying the indication proximate to a respective portion of the textual content that is determined to be relevant to a respective suggested action of the one or more suggested actions.

6. The method of any one of claims 1-5, wherein the one or more suggested actions are identified for one or more user-selected categories of suggested actions.

7. The method of any one of claim 1-6, wherein the one or more suggested actions are identified based on detection that a second portion of the textual content is a first category of text.

8. The method of claim 7, wherein the first category of text includes people, entities, places, locations, dates, times, numbers, activities, and/or events.

9. The method of any one of claims 1-8, wherein the one or more suggested actions include adding an event to a calendar, adding an appointment to a calendar, setting a reminder, displaying directions, making a note, updating a list, and/or viewing information.

10. The method of any one of claims 1-9, wherein the one or more suggested actions are identified based on one or more artificial intelligence models.

11. The method of claim 10, wherein a first artificial intelligence model identifies a first set of one or more suggested actions and a second artificial intelligence model refines the first set of one or more suggested actions identified by the first artificial intelligence model.

12. The method of any one of claims 1-11, wherein displaying the second user interface includes displaying information based on the textual content.

13. The method of any one of claims 1-12, further comprising:
after performing the suggested action, displaying, via the one or more display generation components and in the first user interface, an indication that the suggested action was performed.

14. A computer-readable storage medium storing one or more programs configured to be executed by one or more processors of a computer system that is in communication with one or more display generation components and one or more input devices, the one or more programs including instructions for performing the method of any of claims 1-13.

15. A computer system that is configured to communicate with one or more display generation components and one or more input devices, the computer system comprising:
one or more processors; and
memory storing one or more programs configured to be executed by the one or more processors, the one or more programs including instructions for performing the method of any of claims 1-13.
